# EUROPEAN PATENT SPECIFICATION

(11) **EP 4 325 690 B1**
(45) Date of publication and mention of the grant of the patent: **26.03.2025**
(21) Application number: 23185967.9
(22) Date of filing: 18.07.2023
(51) Int. Cl.: H02J 7/00

(54) **CHARGING SYSTEM**
LADESYSTEM
SYSTÈME DE CHARGE

(30) Priority: 05.08.2022 CN 202210936594; 18.01.2023 CN 202310076525; 16.03.2023 CN 202310257943; 19.05.2023 CN 202310576380; 19.05.2023 CN 202310571863; 19.05.2023 CN 202310569121; 19.05.2023 CN 202321228935 U; 19.05.2023 CN 202321238513 U; 19.05.2023 CN 202310571904; 19.05.2023 CN 202321255299 U; 19.05.2023 CN 202310573987; 19.05.2023 CN 202310574003; 19.05.2023 CN 202310574674; 19.05.2023 CN 202321234158 U
(43) Date of publication of application: 21.02.2024
(73) Proprietor: Nanjing Chervon Industry Co., Ltd., Nanjing, Jiangsu 211106 (CN)
(72) Inventor: LI, Zhengzheng, Nanjing (CN); GENG, Zheng, Nanjing (CN); LU, Zhijian, Nanjing (CN); BERMAN, Corey, Nanjing (CN); XIAO, Yiwen, Nanjing (CN); TONG, Jiajun, Nanjing (CN); HUANG, He, Nanjing (CN); ZHANG, Yuexiang, Nanjing (CN); CAO, Yafei, Nanjing (CN)
(74) Representative: Sun, Yiming

(56) References cited:
- CN-A- 114 204 619
- US-A1- 2005 024 021
- US-A1- 2017 070 067
- US-A1- 2019 181 651

## Description

### TECHNICAL FIELD

The present application relates to a charging system.

### BACKGROUND

The related art discloses a charging system applicable to a power tool. The charging system includes multiple chargers. The charger includes multiple battery interfaces, and each battery interface is connected to a battery pack, so the charger can charge multiple battery packs. At present, the multiple chargers in the charging system have the same charging interfaces for charging the same type of battery packs. However, the requirements of the user for charging multiple types of battery packs cannot be satisfied. US2017/0070067A discloses a charging system for batteries for power tools.

### SUMMARY

The present application provides an electrical energy receiving device suitable for convenient charging of multiple energy storage devices, and the electrical energy receiving device has a relatively strong current output capability and can increase the charging speed of a battery pack in a charging system. Aspects of the invention are disclosed in independent system claim 1.

To achieve the preceding object, the present application adopts the technical solutions described below. A charging system includes multiple cascaded devices, where the multiple cascaded devices include at least one first charging device and at least one second charging device. A first charging device of the at least one first charging device includes a housing; at least one first accommodation portion disposed at the housing and used for mounting a first energy storage device, where the first charging device is capable of charging the first energy storage device mounted to a first accommodation portion of the at least one first accommodation portion; and a connecting port for connecting a second charging device of the at least one second charging device or the first charging device. The second charging device includes a housing; at least one second accommodation portion disposed at the housing and used for mounting a second energy storage device, where the second charging device is capable of charging the second energy storage device mounted to a second accommodation portion of the at least one second accommodation portion; and a connecting port for connecting the first charging device or the second charging device. The first accommodation portion and the second accommodation portion have different shapes or dimensions.

In one example, the first accommodation portion is configured to mount the first energy storage device, the second accommodation portion is configured to mount the second energy storage device, and the capacity of the first energy storage device is greater than the capacity of the second energy storage device.

In one example, the first energy storage device includes multiple first energy storage units, the second energy storage device includes multiple second energy storage units, and the multiple first energy storage units and the multiple second energy storage units have different chemical properties.

In one example, each of the multiple first energy storage units is a lithium iron phosphate cell.

In one example, each of the multiple second energy storage units is a ternary lithium cell.

In one example, the first charging device and the second charging device are the same. In one example, the first charging device and the second charging device are different. In one example, the second charging device is a riding mower with a charging function. In one example, the first charging device and the second charging device are capable of being connected through a cable.

In one example, the connecting port of the first charging device and the connecting port of the second charging device have the same shape.

In one example, the output power of the first charging device or the second charging device is greater than or equal to 500 W and less than or equal to 2000 W.

In one example, the current in the first energy storage device is capable of flowing to the second energy storage device.

In one example, multiple second charging devices are capable of being stacked.

In one example, the second charging device has multiple second accommodation portions, where at least two of the multiple second accommodation portions have different shapes or dimensions.

In the present invention, the connecting port includes a first port and a second port, where the first port and the second port are used for inputting the current or outputting the current, and the first port and the second port are capable of being used interchangeably.

The present application adopts the technical solutions described below. A charging system includes multiple cascaded devices, where the multiple cascaded devices include at least one first charging device and at least one second charging device. A first charging device of the at least one first charging device includes a housing; multiple accommodation portions disposed at the housing and used for mounting energy storage devices, where the first charging device is capable of charging the energy storage devices mounted to the multiple accommodation portions; and a connecting port for connecting a second charging device of the at least one second charging device or the first charging device. The second charging device includes a housing; multiple accommodation portions disposed at the housing and used for mounting energy storage devices, where the second charging device is capable of charging the energy storage devices mounted to the multiple accommodation portions; and a connecting port for connecting the first charging device or the second charging device. The multiple accommodation portions of the second charging device include at least one first accommodation portion and at least one second accommodation portion, and the at least one first accommodation portion and the at least one second accommodation portion have different shapes or dimensions.

In one example, a first energy storage device includes multiple first energy storage units, a second energy storage device includes multiple second energy storage units, and the multiple first energy storage units and the multiple second energy storage units have different chemical properties.

In one example, each of the multiple first energy storage units is a lithium iron phosphate cell.

In one example, each of the multiple second energy storage units is a ternary lithium cell.

In one example, the second charging device is a riding mower with a charging function.

The present application adopts the technical solutions described below. A charging system includes a charger, at least one first adapter, and at least one second adapter. A first adapter of the at least one first adapter includes a housing; at least one coupling portion for mounting an energy storage device, where the first adapter is capable of charging the energy storage device mounted to one of the at least one coupling portion; an electrical energy input port for connecting the charger; and an electrical energy output port for connecting a second adapter of the at least one second adapter. The second adapter includes a housing; at least one coupling portion for mounting an energy storage device, where the second adapter is capable of charging the energy storage device mounted to one of the at least one coupling portion; and an electrical energy input port for connecting the first adapter. The current outputted by the charger flows through the first adapter and the second adapter so that the first adapter and the second adapter implement a charging function, and the charger is also capable of charging a power tool.

In one example, the output power of the charger is greater than or equal to 500 W and less than or equal to 2000 W, the charger includes an alternating current-direct current conversion module, and the current outputted by the charger is a direct current.

In one example, the second adapter further includes an electrical energy output port.

In one example, the first adapter and the second adapter are the same.

In one example, the first adapter and the second adapter are different.

In one example, the charger includes an output port for connecting the electrical energy input port of the first adapter, where the output port is movable.

In one example, when the electrical energy output port of the first adapter is connected to the electrical energy input port of the second adapter, the relative positions of the first adapter and the second adapter are adjustable.

In one example, when the first adapter is partially damaged, the current outputted by the charger flows through the second adapter so that the second adapter implements the charging function.

In one example, the power tool is a riding vehicle.

In one example, the riding vehicle includes a first interface configured to be electrically connected to the electrical energy output port of the first adapter or an electrical energy output port of the second adapter, and a connection manner between the riding vehicle and the electrical energy output port includes a wired connection, a wireless connection, and a hard connection.

The present application adopts the technical solutions described below. A power supply system includes a power supply; an electrical energy conversion device configured to be electrically connected to the power supply and convert the characteristic of the current drawn from the power supply; and an electrical energy receiving device, where multiple electrical energy receiving devices are electrically connected to the electrical energy conversion device, and multiple energy storage devices are detachably mounted on the multiple electrical energy receiving devices. The multiple energy storage devices include at least a first energy storage device and a second energy storage device, where when the power supply is powered on, the power supply charges the first energy storage device and the second energy storage device; and when the power supply is cut off, the first energy storage device charges the second energy storage device.

In one example, the electrical energy receiving device includes at least one of a direct current-direct current charger and a riding vehicle, where the direct current-direct current charger is connected to the riding vehicle.

In one example, the first energy storage device and the second energy storage device are mounted to a direct current-direct current charger, and the first energy storage device charges the second energy storage device.

In one example, the first energy storage device is mounted to a first direct current-direct current charger, the second energy storage device is mounted to a second direct current-direct current charger, and the first energy storage device charges the second energy storage device.

In one example, the first energy storage device is mounted to the riding vehicle, the second energy storage device is mounted to the direct current-direct current charger, and the first energy storage device charges the second energy storage device.

In one example, a wireless communication module communicatively connected to a remote device is further included, where the wireless communication module is configured to receive a signal outputted by the remote device to control the first energy storage device to charge the second energy storage device.

In one example, the wireless communication module is configured to receive the signal outputted by the remote device to control the first energy storage device on the direct current-direct current charger or the first energy storage device on the riding vehicle to charge the second energy storage device.

In one example, the remote device is configured to acquire a signal outputted by the wireless communication module to display remaining charge time or charging failure information.

In one example, the capacity of the first energy storage device is greater than or equal to twice the capacity of the second energy storage device.

In one example, the power supply includes at least one of a solar panel, a charging pile for an electric vehicle, a charging port for a vehicle, and a mains socket.

The present application adopts the technical solutions described below. A power supply system includes a power supply; an electrical energy conversion device configured to be electrically connected to the power supply and convert the characteristic of the current drawn from the power supply; and an electrical energy receiving device, where multiple electrical energy receiving devices are electrically connected to the electrical energy conversion device, and multiple energy storage devices are detachably mounted on the multiple electrical energy receiving devices. The electrical energy conversion device further includes an alternating current output port, where when the power supply is cut off, the electrical energy of the multiple energy storage devices mounted on the multiple electrical energy receiving devices is outputted in a form of an alternating current through the alternating current output port.

In one example, the alternating current output port includes at least one of a mains 2 pin socket and a mains 3 pin socket.

In one example, the alternating current output port can be connected to a home grid to supply power to the home grid, the home grid has an alternating current input interface for connecting the alternating current output port, a power bus, a direct current device interface, and an alternating current device interface, and the voltage of the power bus is 56 V.

In one example, a wireless communication module communicatively connected to a remote device is further included, where the wireless communication module is configured to be communicatively connected to a home grid.

In one example, a remote device is capable of recording the number of times and the duration that a home grid acquires the electrical energy through an alternating current input interface.

In one example, a remote device is configured for a user to set which circuit in a home grid is prioritized for power supply.

In one example, the power supply includes at least one of a solar panel, a charging pile for an electric vehicle, a charging port for a vehicle, and a mains socket.

In one example, the electrical energy receiving device includes a direct current-direct current charger and a power adapter.

In one example, the electrical energy receiving device includes an outdoor traveling device.

In one example, the electrical energy conversion device includes a bidirectional inverter module.

The present application adopts the technical solutions described below. A charger includes a housing; at least one first coupling portion for mounting a first energy storage device; at least one second coupling portion for mounting a second energy storage device; and a charging circuit at least partially disposed in the housing. The capacity of the first energy storage device is greater than or equal to twice the capacity of the second energy storage device. The first energy storage device includes at least one first cell unit, the second energy storage device includes at least one second cell unit, and the capacity of each of the at least one first cell unit is at least four times the capacity of each of the at least one second cell unit. The charging circuit is configured to charge the second energy storage device using the first energy storage device.

In one example, two second coupling portions are provided.

In one example, the charging circuit is further configured to simultaneously charge two second energy storage devices using the first energy storage device.

In one example, the charging circuit is further configured to charge the second energy storage device with larger remaining power among two second energy storage devices using the first energy storage device.

In one example, the charger further includes a first port for connecting an external power supply, where the charging circuit is electrically connected to the first port.

In one example, when the first port is not connected to the external power supply, the charging circuit is configured to charge the second energy storage device using the first energy storage device.

In one example, when the first port is connected to the external power supply, the charging circuit is configured to charge the second energy storage device using the external power supply.

In one example, when the first port is connected to the external power supply, the charging circuit is configured to charge the first energy storage device using the external power supply.

In one example, when the first port is connected to the external power supply, the charging circuit simultaneously charges the first energy storage device and the second energy storage device using the external power supply.

In one example, the external power supply is an alternating current power supply, and the charger further includes an inverter circuit for converting the alternating current power supply into a direct current power supply.

In one example, the external power supply is a direct current power supply outputted by a high-power charger.

In one example, the charger further includes a second port for connecting a second charging device.

In one example, the charger and the second charging device perform charging according to a preset sequence.

The present application adopts the technical solutions described below. A charging system includes multiple charging devices. One of the multiple charging devices includes a housing; a first accommodation portion disposed at the housing and used for mounting a first energy storage device, where the first energy storage device includes multiple first cells; and a second accommodation portion disposed at the housing and used for mounting a second energy storage device, where the second energy storage device includes multiple second cells. The volume of one of the multiple first cells is greater than the volume of one of the multiple second cells, and the multiple charging devices are capable of being stacked; and when the multiple charging devices are stacked on a plane, the multiple first cells are basically parallel to the plane.

In one example, the second energy storage device is inserted into the second accommodation portion along an extension direction of a second straight line, and the included angle β formed by the second straight line and the plane is greater than or equal to 45 degrees and less than or equal to 80 degrees.

In one example, the second energy storage device is inserted into the second accommodation portion along an extension direction of a second straight line, and the included angle β formed by the second straight line and the plane is greater than or equal to 50 degrees and less than or equal to 70 degrees.

In one example, one of the multiple charging devices further includes a frame, and the housing is accommodated within a cuboid defined by the frame.

In one example, a top corner of the frame forms a protrusion or a recess; and when the multiple charging devices are stacked, protrusions and recesses between connected frames are capable of mating with each other and being fixed.

In one example, when the multiple charging devices are stacked, at least part of the battery packs mounted on the multiple charging devices are inaccessible.

In one example, wheels and a pull rod are capable of being detachably mounted on the frame.

In one example, the frame includes or is formed with a handle for a user to lift.

In one example, one of the multiple charging devices further has a power display unit for displaying a power state of an energy storage device mounted on the one of the multiple charging devices.

In one example, the multiple charging devices are capable of being stacked in a first manner and a second manner.

In one example, the placement direction of the multiple charging devices in the first manner is different from the placement direction of the multiple charging devices in the second manner.

In one example, when the multiple charging devices are stacked in the first manner, all battery packs mounted on the multiple charging devices are accessible.

In one example, when the multiple charging devices are stacked in the second manner, at least part of the battery packs mounted on the multiple charging devices are inaccessible.

The present application adopts the technical solutions described below. A charging device includes a housing; a battery pack interface disposed on the housing and configured to be capable of being coupled with a battery pack; and a fixing device configured to be operated by a user to switch between a first state and a second state, where when the fixing device is in the first state, the battery pack is fixed on the charging device; and when the fixing device is in the second state, the battery pack is movable freely relative to the charging device. The charging device further includes a locking device, where the locking device includes a locked state and an unlocked state. When the locking device is in the locked state, the fixing device is constrained in the first state; and when the locking device is in the unlocked state, the fixing device is capable of being operated by the user to switch to the second state.

In one example, an unlocking manner of the locking device includes at least one of fingerprint recognition, a mechanical lock, voice control, face recognition, and remote unlocking.

In one example, the locking device or the fixing device is configured to unlock or lock multiple battery packs mounted to the battery pack interface one by one.

In one example, the locking device or the fixing device is configured to simultaneously unlock or lock multiple battery packs mounted to the battery pack interface.

In one example, the locking device includes a latch.

In one example, the fixing device comprises a snap.

In one example, a limiting portion is formed on the fixing device, and a ratchet is disposed on the locking device.

In one example, when the locking device is in the locked state, the limiting portion abuts against the ratchet, and the fixing device cannot switch from the first state to the second state.

In one example, the charging device further includes a fixing assembly for fixing the charging device to another object.

In one example, the charging device further includes a first port and a second port that are disposed on the housing, where the first port is used for inputting the current, and the second port is used for outputting the current.

The present application adopts the technical solutions described below. A charging device includes a housing; and a battery pack interface disposed on the housing and configured to be capable of being coupled with a battery pack. The charging device further includes an anti-theft device, where the anti-theft device includes a locked state and an unlocked state. When the anti-theft device is in the locked state, the battery pack is constrained within a first distance from the charging device; and when the anti-theft device is in the unlocked state, the battery pack is removable from the charging device.

In one example, an unlocking manner of the anti-theft device may be at least one of fingerprint recognition, a mechanical lock, voice control, face recognition, and remote unlocking.

In one example, the anti-theft device is configured to unlock or lock multiple battery packs mounted to the battery pack interface one by one.

In one example, the anti-theft device is configured to simultaneously unlock or lock multiple battery packs mounted to the battery pack interface.

In one example, the anti-theft device is a chain.

In one example, an end of the anti-theft device is connected to the battery pack, and the other end of the anti-theft device is connected to the charging device.

In one example, the first distance is less than or equal to 1 meter.

In one example, the first distance is less than or equal to 0.5 meters.

In one example, the charging device further includes a first port and a second port that are disposed on the housing, where the first port is used for inputting the current, and the second port is used for outputting the current.

In one example, the charging device further includes a fixing assembly for fixing the charging device to another object.

The present application adopts the technical solutions described below. A charging device includes a housing; at least one battery pack interface disposed on the housing and configured to be capable of being coupled with a battery pack; a first port disposed on the housing and used for inputting the current or outputting the current; and a second port disposed on the housing and used for outputting the current or inputting the current. The first port and the second port are capable of being used interchangeably. When the first port is configured to input the current, the second port is configured to output the current; and when the second port is configured to input the current, the first port is configured to output the current.

In one example, the first port and the second port have the same shape.

In one example, the first port and the second port are symmetrically disposed on two sides of the charging device.

In one example, the first port and the second port are disposed on the upper portion of the housing.

In one example, the first port is disposed on the upper portion of the housing, and the second port is disposed on the lower portion of the housing.

In one example, the first port and the second port are disposed on the lower portion of the housing.

In one example, the first port and the second port have basically the same voltage.

In one example, the first port is used for connecting a first charging device.

In one example, the second port is used for connecting a second charging device.

In one example, the first port and the second port are connected to other devices through cables.

In one example, a cable includes a quarter-turn connector.

The present application adopts the technical solutions described below. A charging device includes a housing; at least one battery pack interface disposed on the housing and configured to be capable of being coupled with a battery pack; a first port for connecting a first charging device; and a second port for connecting a second charging device. The first port and the second port have the same structure and are capable of separately receiving a current input at different times.

In one example, the first port and the second port are symmetrical about a middle plane of the charging device.

In one example, the first port and the second port are connected to other devices through cables.

In one example, the first port and the second port are disposed on the upper portion of the charging device.

The present application adopts the technical solutions described below. A charging device includes a first adapter and a second adapter. The first adapter includes a housing; at least one accommodation portion for mounting an energy storage device, where the first adapter is capable of charging the energy storage device mounted to one of the at least one accommodation portion; and a first port disposed on the housing and used for connecting the second adapter. The second adapter includes a housing; at least one accommodation portion for mounting an energy storage device, where the second adapter is capable of charging the energy storage device mounted to one of the at least one accommodation portion; and a second port disposed on the housing and used for connecting the first adapter. The first port and the second port have the same structure and are connected through a cable.

In one example, the cable is configurable in different lengths.

In one example, at least one end of the cable is configured to be a quarter-turn connector.

In one example, an end of the cable is detachable from the first port.

In one example, an end of the cable is detachable from the second port.

In one example, the first adapter and the second adapter are the same.

In one example, the first adapter and the second adapter are different.

In one example, the first adapter further includes a support assembly capable of supporting the second adapter.

In one example, the first adapter further includes a fixing assembly for fixing the first adapter to another object.

In one example, the first port is disposed on the upper portion of the housing of the first adapter.

The present application adopts the technical solutions described below. A charging system includes at least one first adapter and at least one second adapter. A first adapter of the at least one first adapter includes a housing; multiple coupling portions disposed on the housing and used for mounting energy storage devices, where the first adapter is capable of charging the energy storage devices mounted on the multiple coupling portions; and an electrical energy output port for connecting a second adapter of the at least one second adapter. The second adapter includes a housing; multiple coupling portions disposed on the housing and used for mounting energy storage devices, where the second adapter is capable of charging the energy storage devices mounted on the multiple coupling portions; and an electrical energy input port for connecting the first adapter. When the electrical energy output port of the first adapter is electrically connected to the electrical energy input port of the second adapter, the first adapter and the second adapter implement a charging function according to a preset sequence.

In one example, the second adapter further includes an electrical energy output port for connecting other adapters.

In one example, a charger is further included, where the first adapter further includes an electrical energy input port, and the charger is electrically connected to the electrical energy input port of the first adapter to supply electrical energy to the first adapter and the second adapter.

In one example, the charger is a bidirectional power supply, and the output power of the charger is greater than or equal to 100 W

In one example, the first adapter and the second adapter are the same or different.

In one example, the multiple coupling portions of the second adapter include a first coupling portion and a second coupling portion, where the first coupling portion and the second coupling portion are used for mounting a first energy storage device and a second energy storage device, respectively, and the first coupling portion and the second coupling portion are different.

In one example, the second adapter is configured to charge the second energy storage device using the first energy storage device.

In one example, the preset sequence is that the first adapter or the second adapter implements the charging function preferentially.

In one example, the preset sequence is set by a user, or a priority between the first adapter and the second adapter is preset at the factory.

In one example, a riding vehicle is further included and includes a first interface, where the first interface is configured to be electrically connected to the electrical energy output port of the first adapter or the electrical energy output port of the second adapter.

In one example, the output power of the first adapter or the second adapter is greater than or equal to 500 W and less than or equal to 2000 W.

The present application adopts the technical solutions described below. A charging system includes at least one first adapter and at least one second adapter. A first adapter of the at least one first adapter includes a housing; multiple mounting portions disposed on the housing, where each of the multiple mounting portions is configured to detachably mount an energy storage device, and the first adapter is capable of charging multiple energy storage devices mounted to the multiple mounting portions; and a connecting port for connecting a second adapter of the at least one second adapter.

The second adapter includes a housing; multiple mounting portions disposed on the housing, wherein each of the multiple mounting portions is configured to detachably mount an energy storage device, and the second adapter is capable of charging multiple energy storage devices mounted to the multiple mounting portions; and a connecting port for connecting the first adapter. The charging system further includes a wireless communication module configured to be communicatively connected to the first adapter and the second adapter, where when the wireless communication module receives a signal from a remote device, the first adapter and the second adapter charge the multiple energy storage devices mounted to the first adapter and the multiple energy storage devices mounted to the second adapter according to a mode set by the signal.

In one example, the mode set by the signal includes a sequential charging mode, where the sequential charging mode includes at least a single sequential charging mode or a combined sequential charging mode.

In one example, the mode set by the signal further includes an alternate charging mode, where the alternate charging mode includes at least a single alternate charging mode or a combined alternate charging mode.

In one example, the first adapter and the second adapter preferentially charge the energy storage device with the maximum power among the multiple energy storage devices mounted to the first adapter and the multiple energy storage devices mounted to the second adapter according to the signal.

In one example, the first adapter and the second adapter preferentially charge the most accessible energy storage device among the plurality of energy storage devices mounted to the first adapter and the plurality of energy storage devices mounted to the second adapter according to the signal.

In one example, the remote device is configured for a user to set the signal to control a sequence of charging and discharging of the energy storage devices mounted to the first adapter and the energy storage devices mounted to the second adapter.

In one example, the first adapter and the second adapter are the same or different.

The present application adopts the technical solutions described below. An adapter includes a housing; multiple coupling portions for mounting energy storage devices; a first port for connecting a first charging device; a second port for connecting a second charging device; and a control circuit at least used for controlling the charge current between the first port and the second port to be turned on and off.

In one example, a charging circuit configured to simultaneously charge multiple energy storage devices accommodated in the multiple coupling portions is further included.

In one example, a charging circuit configured to preferentially charge an energy storage device with the maximum remaining power among multiple energy storage devices accommodated in the multiple coupling portions is further included.

In one example, an operating member is further included, where the charging circuit is configured to charge the multiple energy storage devices accommodated in the multiple coupling portions according to a sequence set by the operating member.

In one example, the first charging device is the adapter or a charger.

In one example, the second charging device is the adapter.

In one example, the second charging device is a second adapter different from the adapter.

In one example, the first port and the second port are both movable.

In one example, the first port is used for connecting the second charging device, and the second port is used for connecting the first charging device.

In one example, the output power of the first charging device or the second charging device is greater than or equal to 500 W and less than or equal to 2000 W.

The present application adopts the technical solutions described below. An adapter includes a housing; multiple coupling portions disposed on the housing and used for mounting energy storage devices; a first port for electrically and communicatively connecting a first charging device; a second port for electrically and communicatively connecting a second charging device; and a control circuit configured to control whether to charge the energy storage devices according to information received by at least one of the first port and the second port.

In one example, a charging circuit is further included, where the control circuit controls the charging circuit to simultaneously charge multiple energy storage devices accommodated in the multiple coupling portions.

In one example, a charging circuit is further included, where the control circuit controls the charging circuit to charge an energy storage device with the maximum remaining power among multiple energy storage devices accommodated in the multiple coupling portions.

In one example, a charging circuit and an operating member are further included, where the charging circuit is configured to charge multiple energy storage devices accommodated in the multiple coupling portions according to a sequence set by the operating member.

In one example, the first charging device is the adapter or a charger.

In one example, the second charging device is the adapter or the second charging device is a second adapter different from the adapter.

In one example, the first port is used for connecting the second charging device, and the second port is used for connecting the first charging device.

In one example, information is transmitted between the charger and the adapter through at least one of power carrier communication and wireless communication.

In one example, the output power of the adapter is greater than or equal to 500 W and less than or equal to 2000 W.

In one example, the second port is disposed outside the housing.

The present application adopts the technical solutions described below. A charging system includes a power supply; an electrical energy conversion device configured to be electrically connected to the power supply and convert the characteristic of the current drawn from the power supply; and at least one electrical energy receiving device electrically connected to the electrical energy conversion device, where each of the at least one electrical energy receiving device includes at least a device equipped with a battery pack. The battery pack includes at least a cell unit, and the at least one electrical energy receiving device is capable of achieving a charging rate of the cell unit greater than or equal to 8 C.

In one example, the at least one electrical energy receiving device is capable of achieving the charging rate of the cell unit greater than or equal to 9 C.

In one example, the output power of each of the at least one electrical energy receiving device is greater than or equal to 500 W and less than or equal to 2000 W.

In one example, the total energy of the battery pack is greater than or equal to 0.5 kW·h and less than or equal to 6 kW·h.

In one example, each of the at least one electrical energy receiving device includes multiple devices equipped with battery packs, where the devices are connected in series.

In one example, the device equipped with the battery pack includes at least one of an alternating current-direct current charger, a bidirectional power supply, a direct current-direct current charger, and a riding vehicle.

In one example, each of the at least one electrical energy receiving device includes a device equipped with at least one battery pack, where the at least one battery pack is detachably mounted to each of the at least one electrical energy receiving device.

In one example, the charging system further includes a control circuit, where the control circuit is at least used for controlling the charge current of the battery pack to be turned on and off.

In one example, the cell unit includes a lithium iron phosphate cell or a ternary lithium cell.

In one example, the power supply includes at least one of a solar panel, a charging pile for an electric vehicle, a charging port for a vehicle, and a mains socket.

### BRIEF DESCRIPTION OF DRAWINGS

FIG. 1 is a perspective view of a charging system as an example;
FIG. 2 is a perspective view of an adapter and energy storage devices of the charging system of FIG. 1;
FIG. 3 is a perspective view of an adapter and energy storage devices of the charging system of FIG. 1 from another perspective;
FIG. 4 is a perspective view of an adapter of the charging system of FIG. 1;
FIG. 5 is a perspective view of the adapter in FIG. 4 to which an energy storage device is mounted;
FIG. 6 is a perspective view of another charging system as an example;
FIG. 7 is a circuit schematic diagram of the charging system in FIG. 1;
FIG. 8 shows another example of an adapter and energy storage devices in a charging system;
FIG. 9A is a perspective view of the adapter in FIG. 8;
FIG. 9B is a perspective view of the adapter in FIG. 8 from another perspective;
FIG. 10 is a schematic view of another charging system as an example;
FIG. 11 is a perspective view of another charging system as an example;
FIG. 12 is a circuit schematic diagram of the charging system in FIG. 11;
FIG. 13 is a circuit topology diagram of a direct current-direct current conversion circuit of the charging system in FIG. 12;
FIG. 14A is a circuit diagram of the direct current-direct current conversion circuit in FIG. 13 in mode A;
FIG. 14B is a circuit diagram of the direct current-direct current conversion circuit in FIG. 13 in mode B;
FIG. 14C is a circuit diagram of the direct current-direct current conversion circuit in FIG. 13 in mode C;
FIG. 14D is a circuit diagram of the direct current-direct current conversion circuit in FIG. 13 in mode D;
FIG. 15 shows a control timing diagram of the direct current-direct current conversion circuit in FIG. 13 and a waveform graph of an inductor current and an output current;
FIG. 16 is a schematic view of a bidirectional charging system as an example;
FIG. 17 is a perspective view of an electrical energy conversion device as an example in FIG. 16;
FIG. 18 is a schematic view of charging and discharging of an outdoor traveling device as an example;
FIG. 19A is a schematic diagram of the electrical connection when a bidirectional inverter module is mounted inside an outdoor traveling device;
FIG. 19B is a schematic diagram of the electrical connection when a bidirectional inverter module is mounted outside an outdoor traveling device;
FIG. 20 is a schematic view of a power supply system when an electrical energy conversion device is an alternating current-direct current charger;
FIG. 21 is a schematic view of a power supply system when an electrical energy conversion device is a direct current-direct current charger;
FIG. 22 is a control schematic diagram of a power supply system supplying power to a home grid;
FIG. 23 is a schematic view of a remote device communicatively connected to a power supply system and a home grid;
FIG. 24 is a schematic diagram of an adapter mounted to an electric driving device;
FIG. 25 is a perspective view of a charging device;
FIG. 26 is a perspective view of a fixing device and a locking device of the charging device in FIG. 25;
FIG. 27 is a perspective view of the fixing device in FIG. 26;
FIG. 28 is a perspective view of the charging device in FIG. 25 from another perspective;
FIG. 29 is a view illustrating the connection relationship between multiple charging devices and cables;
FIG. 30 is a perspective view of a charging device as another example;
FIG. 31 is a schematic view illustrating the installation relationship between the charging device and energy storage devices in FIG. 30;
FIG. 32 is a schematic view of the position of a circuit board of the charging device in FIG. 30;
FIG. 33 is a perspective view of the charging device in FIG. 30 from another perspective;
FIG. 34 is a schematic view of multiple charging devices stacked according to a first manner;
FIG. 35 is a schematic view of multiple charging devices stacked according to a second manner;
FIG. 36 is a schematic view of a charging device with a pull rod and wheels;
FIG. 37 is a schematic view of multiple stacked charging devices with a pull rod and wheels; and
FIG. 38 is a schematic view of multiple charging devices placed in a movable cabinet;
FIG. 39 is a schematic view of multiple charging devices stacked along a third direction.

### DETAILED DESCRIPTION

To make solved technical problems, adopted technical solutions, and achieved technical effects of the present application more apparent, the technical solutions in examples of the present application are further described in detail below in conjunction with the drawings. Apparently, the examples described below are part, not all, of the examples of the present application. Based on the examples of the present application, all other examples obtained by those skilled in the art without creative work are within the scope of the present application.

In the description of the present application, the terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or "interaction relations between two elements". For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

It is to be understood by those of ordinary skill in the art that a relative term (such as "about", "approximately", "substantially", and "basically") used in conjunction with a quantity or a condition includes a stated value and has a meaning dictated by the context (for example, the term includes at least a degree of error associated with the measurement of a particular value, a tolerance (such as manufacturing, assembly, and use) associated with the particular value, and the like). Such a term should also be considered as disclosing the range defined by the absolute values of two endpoints. The relative term may refer to plus or minus a percentage (such as 1%, 5%, 10%, or more) of an indicated value. Of course, a value not modified by the relative term should also be disclosed as a particular value with a tolerance.

The present application is described below in detail in conjunction with drawings and examples.

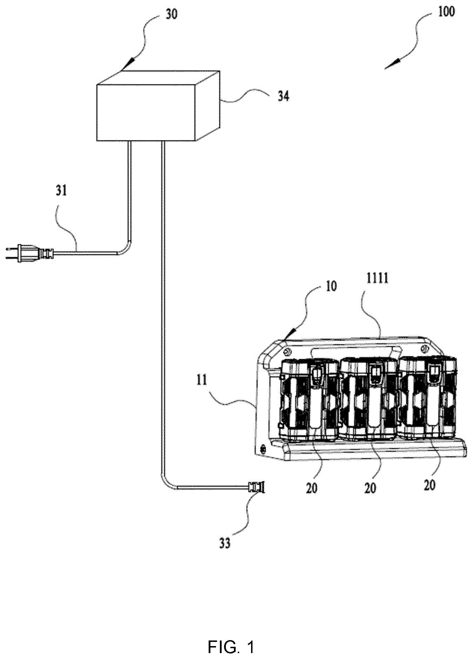

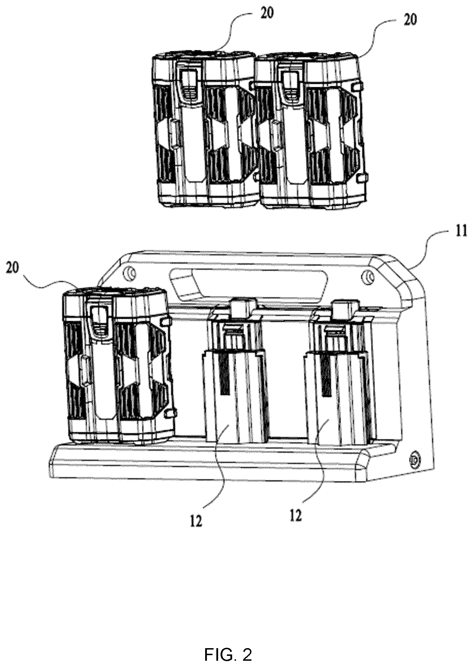

As shown in FIGS. 1 and 2, a charging system 100 includes at least an adapter 10, energy storage devices 20, and a charger 30. The energy storage devices 20 are detachably connected to a power tool or the adapter 10 to provide the stored electrical energy to the power tool or receive and store the electrical energy outputted by the charger 30. In some examples, the charging system 100 is used for providing power to the power tool.

The charger 30 includes a housing 34, an alternating current input power cord 31, an alternating current-direct current conversion module (not shown in the figure) disposed in the housing 34, and an output port 33. The alternating current input power cord 31 is used for connecting the mains power or other forms of alternating current power. The alternating current-direct current conversion module is used for converting the connected mains power or other forms of alternating current power into direct current power. In some examples, the alternating current-direct current conversion module includes an alternating current-direction current (AC-DC) conversion circuit, such as an inverter circuit. The AC-DC conversion circuit may be a bridge rectifier circuit. The output port 33 is electrically connected to the adapter 10 to provide a charge voltage for the energy storage devices 20 mounted on the adapter 10. In this example, the output power of the charger 30 is greater than or equal to 500 W and less than or equal to 2000 W.

In some examples, the charger 30 can also be used for charging the power tool. The power tool is a riding vehicle. Specifically, the riding vehicle includes, but is not limited to, a riding mower, a riding snow thrower, an all-terrain vehicle, and an electric motorcycle.

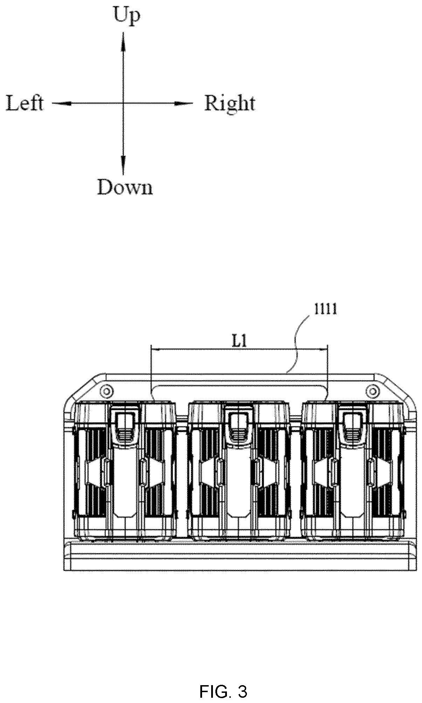

As shown in FIGS. 1 and 3, the adapter 10 includes a housing 11, at least one coupling portion 12, and a handle 1111 for a user to hold. The at least one coupling portion 12 is disposed on the housing 11 and used for mounting multiple energy storage devices 20. The adapter 10 can charge the energy storage devices 20 mounted on the at least one coupling portion 12. Specifically, the energy storage device 20 includes a battery pack. In some examples, the multiple energy storage devices 20 may be the same type of battery packs or may include two or more different types of battery packs. For example, the battery packs have different capacities and different rated (nominal) voltages. The output power of the adapter 10 is greater than or equal to 500 W and less than or equal to 2000 W.

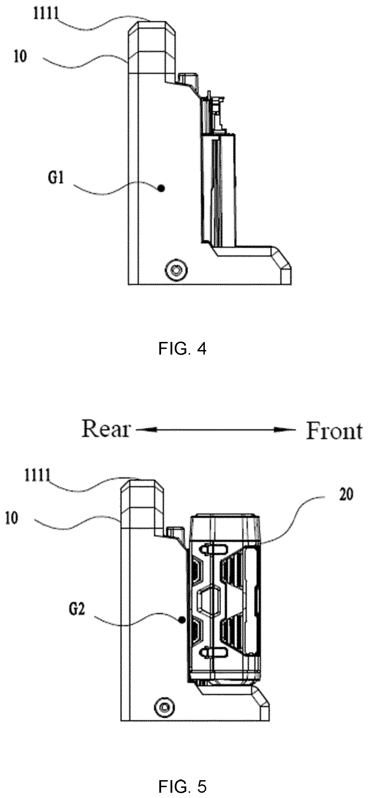

As shown in FIGS. 3 to 5, the directions such as up, down, left, right, front, and rear as shown in FIGS. 3 and 5 are defined. The left and right direction is defined as the extension direction of the housing 11 of the adapter 10. The projection of the adapter 10 on a plane perpendicular to the left and right direction is substantially L-shaped. The energy storage devices 20 can be detachably coupled to the coupling portions 12 of the adapter 10 along the up and down direction or the front and rear direction. When one of the energy storage devices 20 is completely charged, the user may remove the fully charged energy storage device 20 and use the energy storage device 20 immediately without waiting for the charging of other energy storage devices 20 to be completed.

The handle 1111 is disposed on the upper portion of the housing 11 of the adapter 10 and extends along the left and right direction. In some examples, the length L1 of the handle 1111 in the left and right direction is greater than or equal to 70 mm. In some examples, the length L1 of the handle 1111 in the left and right direction is greater than or equal to 80 mm. In some examples, as shown in FIG. 4, when the user holds the handle 1111 to lift the adapter 10, the projection of the center of gravity G1 of the adapter 10 on the horizontal plane falls within the projection of the adapter 10 on the horizontal plane. The horizontal plane may be understood as the ground or ground plane. Specifically, the center of gravity G1 of the adapter 10 is located below the handle 1111 in the up and down direction. As shown in FIG. 5, when the energy storage device 20 is mounted to at least one coupling portion 12 of the adapter 10, the center of gravity G2 of the adapter is located on the front side of the handle 1111 in the front and rear direction.

In this manner, regardless of whether the energy storage device 20 is mounted on the adapter 10, when the user lifts the handle 1111 on the adapter 10, the center of gravity of the adapter or the whole of the adapter and the energy storage device can be close to the handle 1111 so that the user can save more effort and have a better experience when lifting the adapter or the energy storage device.

The adapter 10 further includes a first port and a second port. The first port is used for electrically and communicatively connecting a first charging device, and the second port is used for electrically and communicatively connecting a second charging device. In some examples, the first charging device is the charger, and the second charging device is the adapter. In some examples, the first charging device is a first adapter, and the second charging device is a second adapter different from the first adapter. It is to be understood that the user may use one or more adapters 10 to mount and charge the multiple energy storage devices 20 at the same time. After charging, the user may optionally detach one or more of the energy storage devices 20 from the adapter 10. Thus, two or more energy storage devices can be charged easily and conveniently.

In some examples, the charging system includes multiple cascaded devices. The multiple cascaded devices include at least one first charging device and at least one second charging device. The first charging device includes a housing and multiple accommodation portions disposed at the housing and used for mounting energy storage devices. The first charging device can charge the energy storage devices mounted to the accommodation portions. The first charging device further includes a connecting port for connecting the second charging device or the first charging device. The second charging device includes a housing and multiple accommodation portions disposed at the housing and used for mounting energy storage devices. The second charging device can charge the energy storage devices mounted to the accommodation portions. The second charging device further includes a connecting port for connecting the first charging device or the second charging device. In some examples, the multiple accommodation portions of the second charging device include at least one first accommodation portion and at least one second accommodation portion. Specifically, the first accommodation portion and the second accommodation portion have different shapes or dimensions. The connecting port may be the first port or the second port. In some examples, the accommodation portions of the first charging device have the same dimension as the first accommodation portion or the second accommodation portion of the second charging device. The cascading may be understood as multiple charging devices connected end-to-end sequentially in structure.

In some examples, the charging system includes multiple cascaded devices, where the multiple cascaded devices include at least one first charging device and at least one second charging device. The first charging device includes a housing and at least one first accommodation portion disposed at the housing and used for mounting a first energy storage device. The first charging device can charge the first energy storage device mounted to the first accommodation portion. A connecting port is used for connecting the second charging device or the first charging device. The second charging device includes a housing and at least one second accommodation portion disposed at the housing and used for mounting a second energy storage device. The second charging device can charge the second energy storage device mounted to the second accommodation portion. A connecting port is used for connecting the first charging device or the second charging device. The first accommodation portion and the second accommodation portion have different shapes or dimensions. The cascading may be understood as multiple charging devices connected end-to-end sequentially in structure.

In some examples, the first accommodation portion is configured to mount the first energy storage device, and the second accommodation portion is configured to mount the second energy storage device. The capacity of the first energy storage device is greater than the capacity of the second energy storage device. The first energy storage device includes multiple first energy storage units, and the second energy storage device includes multiple second energy storage units. In some examples, the first energy storage units and the second energy storage units have different chemical properties. In some examples, the first energy storage unit is a lithium iron phosphate cell. The second energy storage unit is a ternary lithium cell. In some examples, the first charging device and the second charging device are the same. In some examples, the first charging device and the second charging device are different. Optionally, the first charging device or the second charging device may be one of a power adapter and a direct current-direct current charger. Optionally, the second charging device may also be a riding mower with a charging function.

In some examples, the first port and the second port may be interchanged. **It** is to be understood that the first port may be used for connecting both the first charging device and the second charging device. Similarly, the second port may be used for connecting both the first charging device and the second charging device.

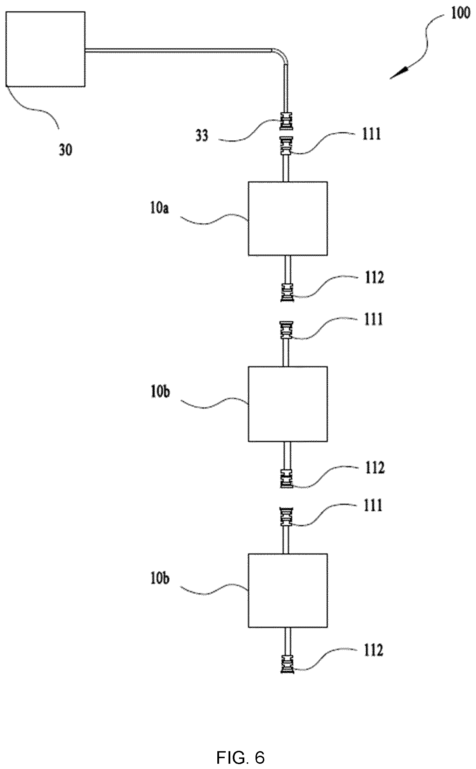

FIG. 6 shows the charging system 100 as an example. The adapter 10 includes at least one first adapter 10a and at least one second adapter 10b (for example, two second adapters 10b are provided in this example). The first adapter 10a and one or more second adapters 10b are connected in series. The charging system 100 can charge a larger number of energy storage devices 20 by connecting a larger number of first adapters 10a and second adapters 10b in series. In some examples, the second adapter 10b and the first adapter 10a are the same. In some examples, the second adapter 10b and the first adapter are different.

Specifically, the first adapter 10a has a first port 111 and a second port 112. The second adapter 10b has a first port 111 and a second port 112. The first port 111 of the first adapter 10a is used for connecting the output port 33 of the charger 30. In some examples, the output port 33 of the charger 30 is movable. The second port 112 of the first adapter 10a is used for connecting the first port 111 of the second adapter 10b. The second port 112 of the second adapter 10b is used for connecting the first port of the other second adapter connected in series. According to the preceding connection manner, the charger 30 is electrically connected to the first adapter 10a and the second adapter 10b in sequence to charge the energy storage device 20 mounted on the first adapter 10a or the second adapter 10b.

In this example, the first port 111 of the first adapter 10a is an electrical energy input port, and the second port 112 of the first adapter 10a is an electrical energy output port. The first port 111 of the second adapter 10b is an electrical energy input port, and the second port 112 of the second adapter 10b is an electrical energy output port. The first adapter 10a and the second adapter 10b are electrically connected through the electrical energy output port and the electrical energy input port. The current outputted by the charger 30 flows through the first adapter 10a and the second adapter 10b so that the first adapter 10a and the second adapter 10b implement the charging function. In some examples, the charger 30 can also be used for charging the power tool. In some examples, the power tool includes the riding vehicle. Specifically, the riding vehicle includes the riding mower, a stand-on mower, the all-terrain vehicle, and the electric motorcycle. Of course, the power tool may also be a snow thrower or a table tool. When the second port 112 (the electrical energy output port) of the first adapter 10a is electrically connected to the first port (the electrical energy input port) of the second adapter 10b, the relative positions of the first adapter 10a and the second adapter 10b are adjustable. Specifically, the first port 111 and the second port 112 of the first adapter 10a are disposed outside the housing 11 of the first adapter 10a. The first port 111 and the second port 112 of the second adapter 10b are disposed outside the housing 11 of the second adapter 10b. In some examples, the second port 112 of the first adapter 10a extends out of the housing 11 of the first adapter 10a through a wire, and the second port 112 of the first adapter 10a is movable relative to the housing 11 of the first adapter 10a. The first port 111 and the second port 112 of the second adapter 10b extend out of the housing 11 of the second adapter 10b through the wire, and the first port 111 and the second port 112 of the second adapter 10b are movable relative to the housing 11 of the second adapter 10b. The wire may be understood as a cable. The above describes the electrical connection between the first adapter 10a and the second adapter 10b. **It** is to be noted that a similar connection manner is adopted between multiple second adapters 10b or multiple first adapters 10a for electric power transmission.

It should be noted that the substantially same or similar structures in different examples or devices may use the same labels. For example, the first adapter 10a and the second adapter 10b may be different devices, which have adopted different labels. The first port in the first adapter 10a and the first port in the second adapter 10b have realized similar functions, and both may be labeled with 111 for now. Other examples also use similar rules for labeling, which will not be described in detail below.

In this manner, the first adapter 10a and the second adapter 10b are electrically connected and connected through a signal via the cable so that the flexibility of the first adapter and the second adapter during installation can be improved. On the other hand, the heat dissipation of the adapter and the energy storage device during a charging process can be facilitated so that the service life and charging performance of the adapter and the energy storage device can be improved.

In some examples, the adapter 10 further includes a fixing assembly. The fixing assembly is used for fixing the adapter 10 to another object. In some examples, the adapter 10 can be fixed on the wall by the fixing assembly. Specifically, the fixing assembly in this example may be a fixing structure that is removable without a tool, such as a snap-fit structure. Of course, the fixing assembly may be a fixing structure that requires a tool to remove, such as a screw and a bolt. In this manner, the fixing assembly is provided to fix the adapter 10 on the wall or a work surface, which is convenient for the user to store and manage the adapter and saves space when the adapter is in use or not in use.

In some examples, the adapter 10 further includes a support assembly so that multiple adapters are stacked. Specifically, the support assembly is used for stacking the first adapter 10a and the second adapter 10b or stacking multiple second adapters 10b. In this manner, the support assembly is provided to stack multiple adapters so that when the user uses more adapters to charge the energy storage devices, or when the adapters are idle, space can be saved and storage and management can be facilitated.

Next, representative circuits of various functions of the charging system 100 are described below.

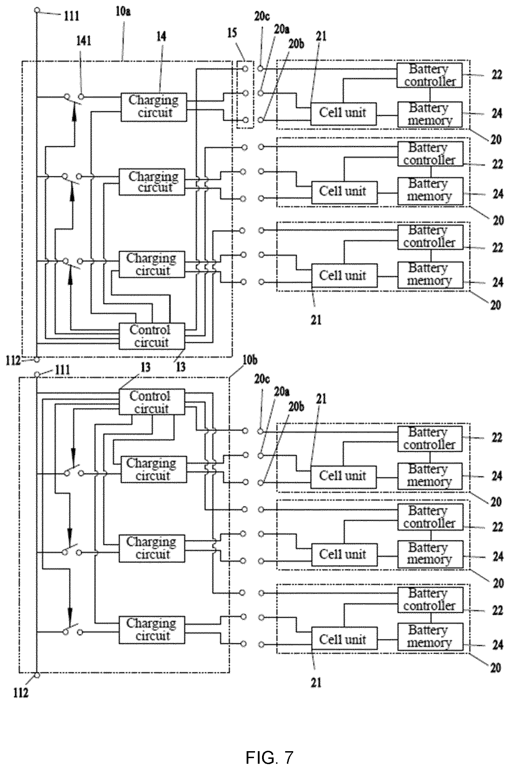

As shown in FIG. 7, in this example, the energy storage device 20 is configured to be the battery pack. The battery pack has multiple cell units 21, at least one battery controller 22, at least one temperature sensor, and at least one battery memory 24. The cell unit 21 in this example is a lithium-ion battery. The multiple cell units 21 are connected to battery positive terminals 20a and battery negative terminals 20b. The battery controllers 22 are connected to the cell units 21 and can detect the electrical parameters of the multiple cell units 21. For example, the battery controllers 22 can detect the voltage and current of the cell units. In addition, the battery controller 22 may estimate the charging level and internal resistance of the cell unit 21 based on the detected voltage of the cell unit 21. The temperature sensor is disposed near the multiple cell units 21 and detects the temperature of the multiple cell units 21. The temperature sensor is connected to the battery controller 22, and the battery controller 22 acquires the temperature of the cell unit 21 through the temperature sensor. The battery controller 22 is connected to a battery communication terminal 20c.

The battery memory 24 is used for storing battery information of the energy storage device. The battery information includes, but is not limited to, at least one or any combination of two or more of the following: a single identification code of the energy storage device 20, a model code of the energy storage device 20, the rated voltage of the energy storage device 20, the rated current of the energy storage device 20, the maximum allowable temperature of the energy storage device 20, the maximum current experienced by the energy storage device 20, the highest temperature experienced by the energy storage device 20, the start date of use of the energy storage device 20, the total charge count of the energy storage device 20, the total discharge count of the energy storage device 20, the total discharge time of the energy storage device 20, and the administrator of the energy storage device 20. The battery memory 24 is connected to the battery controller 22. The battery controller 22 can read, update, overwrite, and delete the battery information stored in the battery memory 24.

The first adapter 10a and the second adapter 10b each include charging circuits 14 and at least one control circuit 13. The charger 30 is connected to an external alternating current power supply through the alternating current input power cord 31. The alternating current-direct current conversion module in the charger 30 converts the alternating current power of the external alternating current power supply into the direct current power. The direct current outputted by the charger 30 is supplied to each charging circuit 14 of the first adapter 10a and the second adapter 10b. Each charging circuit 14 is connected to a corresponding battery interface 15 and controls the charge current supplied from the battery interface 15 to the corresponding energy storage device 20. Specifically, a switch 141 is disposed between the first port 111 of the first adapter 10a and each charging circuit 14. Each switch 141 is controlled by a corresponding control circuit 13. When one of the energy storage devices 20 is connected to the corresponding battery interface 15, the control circuit 13 controls the corresponding switch 141 to be turned on, so as to charge the energy storage device 20. When the energy storage device 20 is separated from the battery interface 15, or when the energy storage device 20 is completely charged, the control circuit 13 turns off the switch 141. **It** is to be noted that the first port and the second port are configured to transmit an electrical signal or a communication signal.

When the energy storage device 20 is electrically connected to the battery interface 15, the control circuit 13 in the adapter is connected to the corresponding battery controller 22 to enable communication between the control circuit 13 and the battery controller 22. The control circuit 13 acquires the battery information stored in the corresponding battery memory 24 from each battery controller 22. In addition, the control circuit 13 may acquire the state indication of the corresponding energy storage device 20 from each battery controller 22. For example, the state indication of each energy storage device 20 includes at least one or any combination of two or more of the following: the charging level of the energy storage device 20, the output voltage of the energy storage device 20, the internal resistance of the energy storage device 20, the temperature of the energy storage device 20, and the charge time of the energy storage device 20. The control circuit 13 stores the acquired battery information and the state indication of each energy storage device 20 in the memory. The battery information and the state indication of each energy storage device 20 are stored in the corresponding memory together with the interface identification information of the battery interface 15 connected to the energy storage device 20.

In some examples, the first adapter 10a further includes a communication circuit (not shown in the figure). Specifically, the communication circuit is connected to the control circuit 13. The communication circuit may be connected to a remote device in a wireless or wired manner to enable communication between the communication circuit and the remote device. The control circuit 13 may send and receive information or signals to and from the remote device via the communication circuit. The remote device referred to herein may be any of the remote devices described above, such as, but not limited to, a mobile phone, a smartphone, a tablet computer, or some other (for example, portable) computer devices.

Next, a charging control method of the charging system 100 is described below.

In this example, according to the information received by at least one of the first port and the second port of the adapter, the control circuit 13 controls whether the charging circuit 14 charges the energy storage device 20 mounted on the adapter 10. Specifically, the control circuit is at least used for controlling the charge current between the first port and the second port to be turned on and off.

In some examples, the control circuit 13 controls the charging circuit 14 to simultaneously charge multiple energy storage devices accommodated in multiple coupling portions. Specifically, when multiple energy storage devices are mounted on the adapter and need to be charged, the control circuit 13 controls the corresponding switch 141 to be turned on so that the direct current outputted by the charger flows through the charging circuit 14, thereby charging the energy storage devices. **It** is to be understood that when the charger is connected to multiple first adapters and second adapters at the same time, multiple energy storage devices mounted on the adapters may be charged in the preceding control method.

In some examples, the control circuit 13 controls the charging circuit 14 to preferentially charge an energy storage device with the maximum remaining power among multiple energy storage devices accommodated in multiple coupling portions. Specifically, when multiple energy storage devices are mounted to the adapter, the battery communication terminal 20c of the energy storage device is connected to a communication terminal in the battery interface 15 of the adapter, and the control circuit 13 is connected to the battery controller 22 to acquire the current remaining power of the multiple energy storage devices and control the switch 141 corresponding to the energy storage device with the maximum remaining power and is not fully charged to be turned on, thereby preferentially charging the corresponding energy storage device. After the energy storage device is completely charged, the control circuit 13 controls the charging circuit 14 charge the energy storage device with the maximum current remaining power and is not fully charged again. This cycle continues until all the energy storage devices mounted to the adapter are completely charged. The advantage is that when the user urgently needs a fully charged energy storage device, the adapter can maximize the power allocated to the energy storage device with the maximum current remaining power for charging to satisfy the requirement of the user as soon as possible. It is to be understood that when the charger is connected to the first adapters and multiple second adapters at the same time, multiple energy storage devices mounted on the adapters may be charged in the preceding control method.

In some examples, the charging system further includes an operating member, where the control circuit 13 controls the charging circuit 14 to charge multiple energy storage devices coupled to multiple coupling portions according to a sequence set by the operating member. Specifically, the operating member may be configured to be a switch mounted on the housing of the adapter. The operating member may also be configured to be a wireless device. When the user needs to charge multiple energy storage devices, the operating member is controlled so as to charge the designated energy storage devices. The advantage is that the adapter is featured with strong operability and high charging flexibility, and according to the requirement of the user, the user can set the energy storage device that needs to be charged preferentially. It is to be understood that when the charger is connected to the first adapters and multiple second adapters at the same time, multiple energy storage devices mounted on the adapters may be charged in the preceding control method.

Specifically, the adapter may be configured to receive an operation instruction signal from the operating member. The operation instruction signal may be a charge start signal or a charge stop signal for instructing the adapter to perform various operations. In this case, the operation instruction signal is preferably received together with the interface identification information of the battery interface 15 which is the target of the operation instruction signal. According to this configuration, the user may designate (select) a specific battery interface 15 and start or stop charging of the battery interface 15.

In some examples, when the charger is connected to at least one first adapter and at least one second adapter at the same time, charging may be performed according to a preset sequence. Specifically, the energy storage device on the first adapter is charged preferentially. Specifically, the energy storage device on the second adapter is charged preferentially. The preset sequence may be set by the user. Of course, the preset sequence may be a priority among the adapters preset at the factory.

In some examples, the current outputted by the charger flows through the first adapter and the second adapter so that the first adapter and the second adapter implement the charging function. When the first adapter is partially damaged, the control circuit controls the current outputted by the charger to flow through the second adapter so that the second adapter implements the charging function.

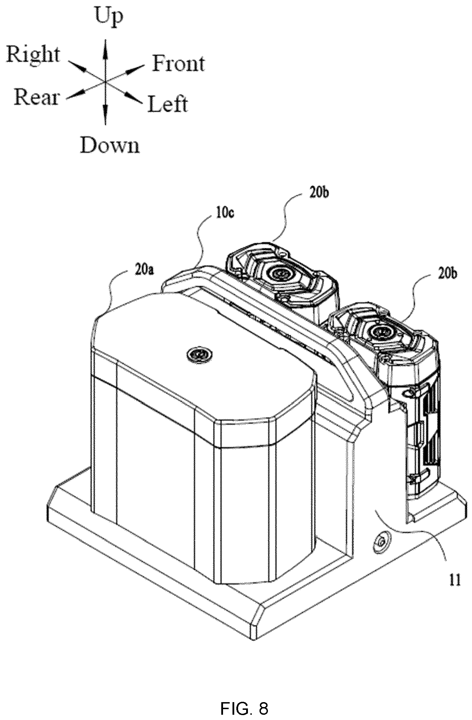

The charging system 100 discussed above includes at least one first adapter 10a and at least one second adapter 10b and is configured such that the first adapter 10a and the second adapter 10b are electrically connected. However, in the present application, the adapters to which the charging system 100 is applicable are not limited to this configuration. For example, FIG. 8 shows another configuration of the adapter in the present application. The adapter in this example may be used as both a charger and an adapter.

The adapter of another configuration is now described with reference to FIGS. 8 to 13.

The charging system 100 further includes an adapter 10c, where the adapter 10c includes the housing 11, multiple coupling portions 12, and the handle 1111 for the user to hold. The multiple coupling portions 12 are disposed on the housing 11 and used for mounting multiple energy storage devices. The coupling portions 12 include at least one first coupling portion 121 and at least one second coupling portion 122. The handle 1111 is integrally formed with the housing 11. Of course, the handle 1111 is also configured to be fixedly mounted to the housing 11 by means of assembly. In this example, the output power of the adapter 10c is greater than or equal to 500 W and less than or equal to 2000 W.

In some examples, the adapter 10c includes at least two second coupling portions 122. Multiple second coupling portions 122 are arranged in a straight line parallel to the extension direction of the handle 1111. The first coupling portion 121 and the second coupling portion 122 have the same interface. In some examples, the first coupling portion 121 and the second coupling portion 122 are different. Specifically, the first coupling portion 121 and the second coupling portion 122 have different interfaces.

In some examples, the energy storage devices mounted to the adapter 10c may have different characteristics. Specifically, the energy storage devices include at least one first energy storage device 20a and at least one second energy storage device 20b. The capacity of the first energy storage device 20a is greater than or equal to twice the capacity of the second energy storage device 20b. The first energy storage device includes at least one first cell unit, the second energy storage device includes at least one second cell unit, and the capacity of the first cell unit is at least four times the capacity of the second cell unit. The first energy storage device 20a is mounted to the first coupling portion 121, and the second energy storage device 20b is mounted to the second coupling portion 122. In this example, the first energy storage device 20a has a first characteristic, and the second energy storage device 20b has a second characteristic different from the first characteristic. The first characteristic or the second characteristic is at least one of the physical dimension, the shape, the chemical property, and the operational characteristic. The first energy storage device 20a includes a lithium iron phosphate cell, and the second energy storage device 20b includes a ternary lithium cell. Types of the first energy storage device include, but are not limited to, lithium ferrophosphate (LFP), Na-ion, solid/semi-solid, the 21700 battery, the 40135 battery, the 4680 battery, the 46950 battery, the 46120 battery, and 35184.

In some examples, the height of the first energy storage device 20a is greater than the height of the second energy storage device 20b. The height of the first energy storage device 20a mounted on the adapter 10c is greater than the height of the second energy storage device 20b mounted on the adapter 10c.

In this example, the first coupling portion 121 for mounting the first energy storage device 20a and the second coupling portion 122 for mounting the second energy storage device 20b are disposed on the front and rear sides of the adapter 10c. **It** is to be understood that the first coupling portion 121 and the second coupling portion 122 are arranged back to back. The advantage of this design is that when the first energy storage device 20a and the second energy storage device 20b mounted on the adapter 10c have different weights and volumes, the adapter on which the energy storage devices are mounted can be placed more stably. On the other hand, with such a design, the overall center of gravity can be closer to the handle, and the user can save more effort when lifting the handle 1111.

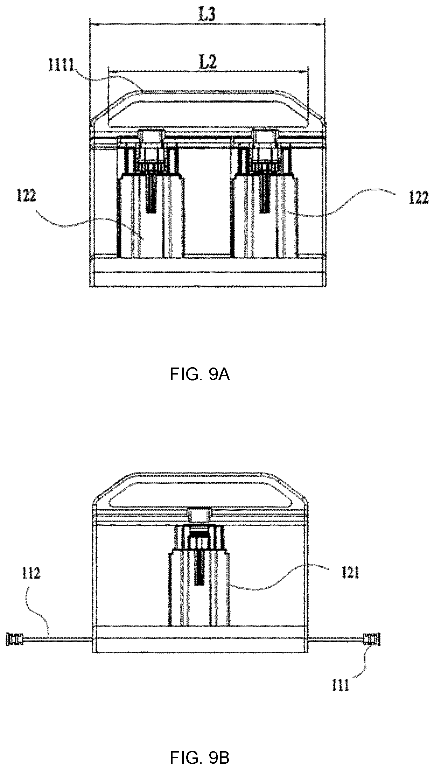

In this example, the directions such as up, down, left, right, front, and rear as shown in FIG. 8 are defined. The left and right direction is defined as the extension direction of the housing 11 of the adapter 10c. The projection of the adapter 10c on a plane perpendicular to the left and right direction is substantially T-shaped. Referring to FIGS. 8 to 9B, the first energy storage device 20a and the second energy storage device 20b can be detachably coupled to the first coupling portion 121 or the second coupling portion 122 of the adapter 10c along the up and down direction or the front and rear direction. The handle 1111 is disposed on the upper portion of the housing 11 of the adapter 10c and extends along the left and right direction. In some examples, as shown in FIG. 9A, the ratio of the length L2 of the handle 1111 in the left and right direction to the length L3 of the adapter 10c in the left and right direction is greater than or equal to 0.7 and less than or equal to 1.

In some examples, the projection of the handle 1111 on the bottom surface of the adapter 10c is located between the projection of the first coupling portion 121 on the bottom surface of the adapter 10c and the projection of the second coupling portion 122 on the bottom surface of the adapter. Specifically, the area of the projection of the second coupling portion 122 on the bottom surface of the adapter 10c is greater than the area of the projection of the first coupling portion 121 on the bottom surface of the adapter 10c.

In this example, the adapter 10c has the first port 111 and the second port 112. The first port 111 is used as the electrical energy input port, and the second port 112 is used as the electrical energy output port for connecting the second charging device. Specifically, when the first port 111 is not connected to an external power supply, the first energy storage device 20a charges the second energy storage device 20b. When the first port 111 is connected to the external power supply, the charging circuit charges the first energy storage device 20a or the second energy storage device 20b using the external power supply. When the first port 111 is connected to the external power supply, the charging circuit simultaneously charges the first energy storage device 20a and the second energy storage device 20b using the external power supply. In some examples, the charging circuit is further configured to charge the second energy storage device with larger remaining power among two second energy storage devices using the first energy storage device. It is to be noted that the external power supply may be the charger or other forms of external direct current power. In some examples, the external power supply is an alternating current power supply. The charger further includes the inverter circuit for converting the alternating current power supply into a direct current power supply. In some examples, the external power supply is a direct current power supply outputted by a high-power charger. The high-power charger may be understood as the charger 30 in the charging system 100. In some examples, the adapter 10c includes the fixing assembly and the support assembly. The structures and functions of the fixing assembly and the support assembly are described above and are not repeated here.

Next, the working principle when the adapter 10c is electrically connected to the charger 30 is described.

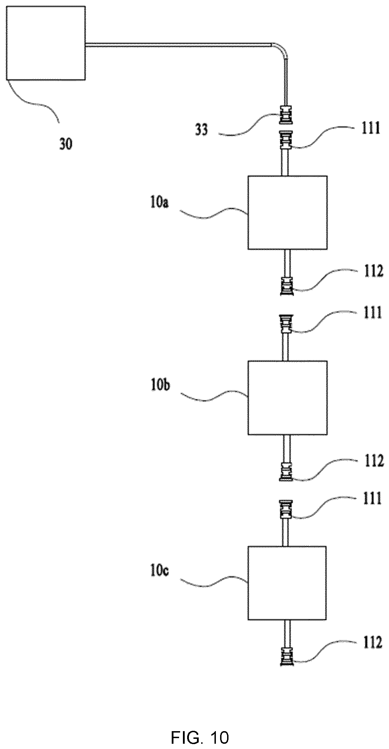

**In** some examples, as shown in FIG. 10, the charging system 100 includes the charger 30, the first adapter 10a, the second adapter 10b, and an adapter 10c. Specifically, the first port 111 of the adapter 10c is connected to the second port 112 of the second adapter 10b, so as to receive the direct current outputted from the charger 30 to charge the first energy storage device 20a and the second energy storage device 20b simultaneously. It is to be noted that the adapter 10c may also be connected between the first adapter 10a and the second adapter 10b. It is to be understood that the connection sequence of the first adapter 10a, the second adapter 10b, and the adapter 10c is not fixed.

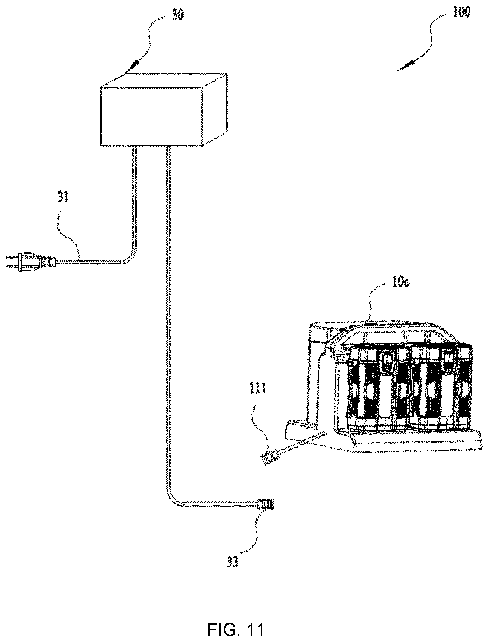

In some examples, as shown in FIG. 11, the charging system 100 includes the charger 30 and the adapter 10c. The first port 111 of the adapter 10c is electrically connected to the output port 33 of the charger 30, so as to receive the direct current outputted from the charger 30 to charge the energy storage device 20a or 20b mounted on the adapter 10c.

In the preceding examples, the adapter 10c is electrically connected to the charger 30 and used for providing a charge voltage to the energy storage device mounted on the adapter 10c. In this example, the energy storage devices on the first adapter 10a, the second adapter 10b, and the adapter 10c are charged according to the preset sequence.

In some examples, the adapter 10c is used as the charger. The difference from the preceding two examples is that the adapter 10c can charge the second energy storage device 20b without being electrically connected to the charger 30. It is to be understood that the first energy storage device 20a mounted on the adapter 10c charges the second energy storage device 20b mounted on the adapter 10c. The control circuit is configured to control the first energy storage device 20a to charge the second energy storage device 20b when an operating parameter of the first energy storage device 20a is greater than or equal to a preset value. The operating parameter includes, but is not limited to, the state of charge and the state of health of the first energy storage device 20a.

In some examples, the first energy storage device 20a simultaneously charges multiple second energy storage devices 20b mounted on the adapter 10c. In some examples, the first energy storage device 20a preferentially charges the second energy storage device 20b with the maximum remaining power among the multiple second energy storage devices 20b. In some examples, the first energy storage device 20a charges the multiple second energy storage devices 20b according to the preset sequence.

The difference between a second charging circuit 14c of the adapter 10c in this example and the charging circuits 14 in the first adapter 10a and the second adapter 10b is that the second charging circuit 14c further includes a direct current-direct current conversion circuit 142. In this example, the output power of the charging circuit 14 is greater than or equal to 500 W and less than or equal to 2000 W.

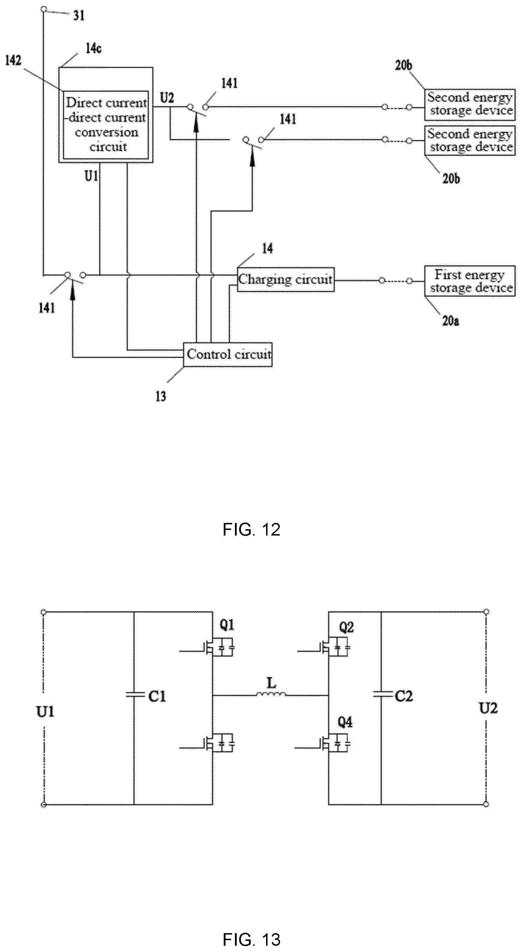

Next, the working manner of the adapter 10c in this example is described in conjunction with FIG. 12.

After the adapter 10c is electrically connected to the charger 30, the control circuit 13 controls the switches 141 to be turned on. Part of the direct current outputted by the charger 30 charges the first energy storage device 20a through the charging circuit 14. The other part of the direct current outputted by the charger 30 charges the second energy storage device 20b through the second charging circuit 14c.

When the adapter 10c is not connected to the charger 30, the control circuit 13 controls the switches 141 to be turned on, and the direct current outputted by the first energy storage device 20a charges the second energy storage device 20b through the second charging circuit 14c.

In some examples, when the adapter 10c is not connected to the charger 30, while charging the second energy storage device 20b, the first energy storage device 20a can also charge the energy storage devices on other adapters electrically connected to the charger 30. Specifically, as shown in FIG. 10, when the adapter 10c is not connected to the charger 30, the first energy storage device 20a can also charge the energy storage device mounted on the first adapter 10a or the second adapter 10b.

In some examples, part of the direct current outputted by the charger 30 charges the first energy storage device 20a through the charging circuit 14. The other part of the direct current outputted by the charger 30 charges the second energy storage device 20b through the second charging circuit 14c. It is to be noted that the preceding direct current does not flow through the direct current-direct current conversion circuit 142. When the adapter 10c is not connected to the charger 30, the direct current outputted by the first energy storage device 20a charges the second energy storage device 20b through the second charging circuit 14c including the direct current-direct current conversion circuit 142.

In some examples, the direct current-direct current conversion circuit 142 adopts the topology as shown in FIG. 13 and converts the direct current outputted by the charger 30 or the direct current U1 outputted by the first energy storage device 20a into the direct current U2, so as to provide a charge voltage to the second energy storage device 20b. The direct current-direct current conversion circuit 142 includes at least a switching tube Q1, a switching tube Q2, a switching tube Q3, a switching tube Q4, a capacitor C1, a capacitor C2, and an inductor L. The control circuit 13 is separately connected to the gates of the switching tube Q1, the switching tube Q2, the switching tube Q3, and the switching tube Q4 and is used for controlling the switching tube Q1, the switching tube Q2, the switching tube Q3, and the switching tube Q4 to be turned on and off, thereby implementing a voltage conversion function of the direct current-direct current conversion circuit. The direct current-direct current conversion circuit 142 in this example may be understood as a four-switch buck-boost (FSBB) circuit. The FSBB circuit is adopted so that soft switching is achieved, thereby improving the conversion efficiency of the direct current-direct current conversion circuit.

Next, the topology and control method of the FSBB circuit are described in detail in conjunction with FIGS. 13 to 15.

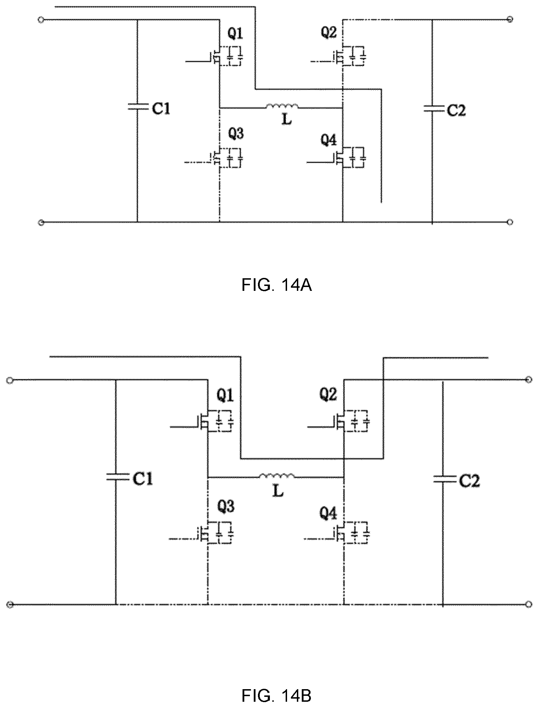

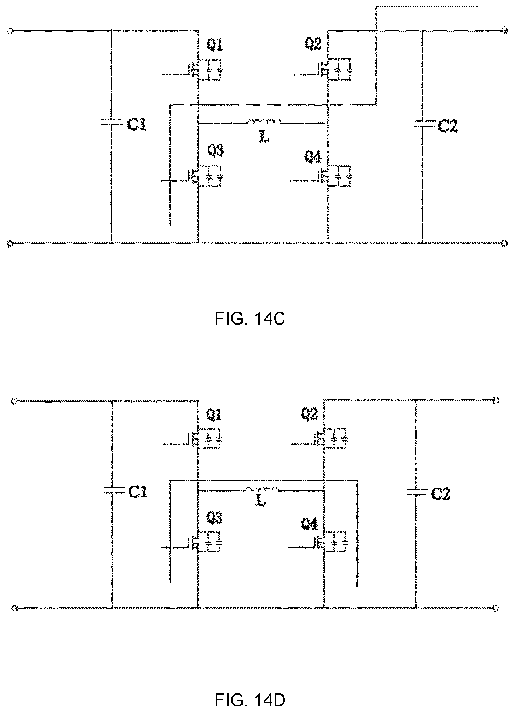

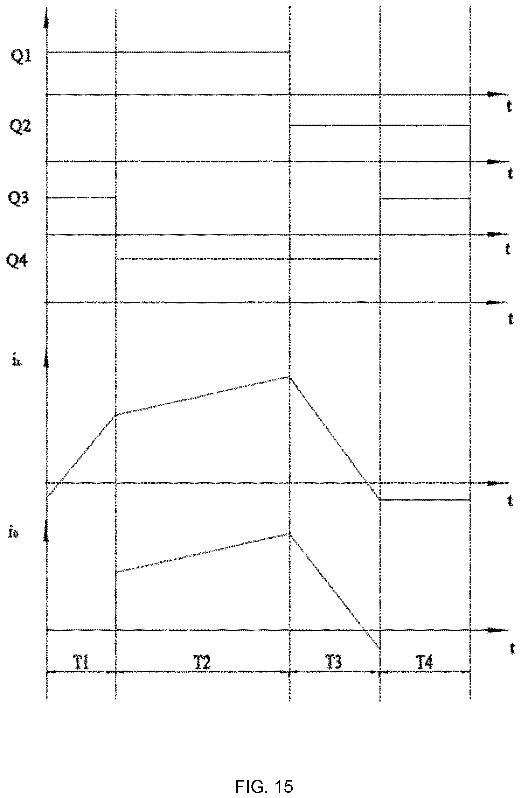

Specifically, as shown in FIGS. 14A and 15, the control circuit controls the switching tubes Q1 and Q4 to be turned on and the switching tubes Q2 and Q3 to be turned off during the T1 period, the inductor voltage is U1, the rising slope of the inductor current i_{L} is U1/L, and the output current i₀ is 0. The preceding process is referred to as the FSBB circuit in working mode A. As shown in FIGS. 14B and 15, the control device controls the switching tubes Q1 and Q2 to be turned on and the switching tubes Q3 and Q4 to be turned off during the T2 period, the inductor voltage is U1-U2, the rising slope of the inductor current i_{L} is U1-U2/L, and the output current i₀ is equal to the inductor current i_{L}. The preceding process is referred to as the FSBB circuit in working mode B. As shown in FIGS. 14C and 15, the control device controls the switching tubes Q2 and Q3 to be turned on and the switching tubes Q1 and Q4 to be turned off during the T3 period, the inductor voltage is U2, the rising slope of the inductor current i_{L} is - U1/L, and the output current i₀ is equal to the inductor current i_{L}. The preceding process is referred to as the FSBB circuit in working mode C. As shown in FIGS. 14D and 15, the control device controls the switching tubes Q3 and Q4 to be turned on and the switching tubes Q1 and Q2 to be turned off during the T4 period, the inductor voltage is 0, the slope of the inductor current i_{L} is 0, and the output current i₀ is equal to 0. The preceding process is referred to as the FSBB circuit in working mode D. In one cycle, the direction of the inductor current changes twice, and the negative current Id exists to achieve the zero-voltage turn-on of the switching tubes Q1 and Q4.

The preceding four working modes may form different working modes of the FSBB circuit. For example, mode A and mode B may be equivalent to the boost working mode, and mode B and mode C may be equivalent to the buck working mode. The inductor voltage of mode D is 0, and the operating frequency of the circuit may be maintained by increasing or decreasing the duration of mode D.

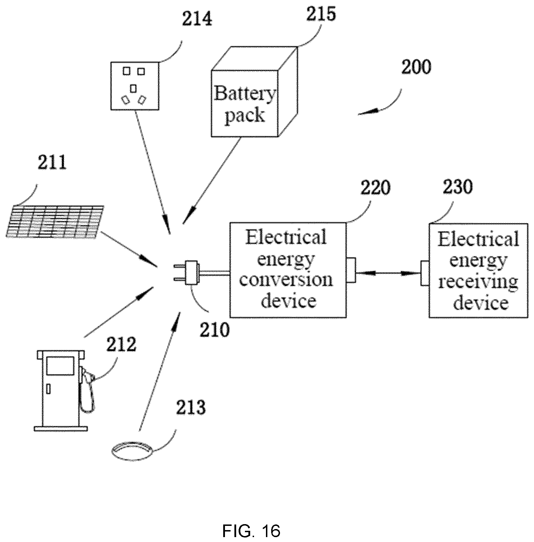

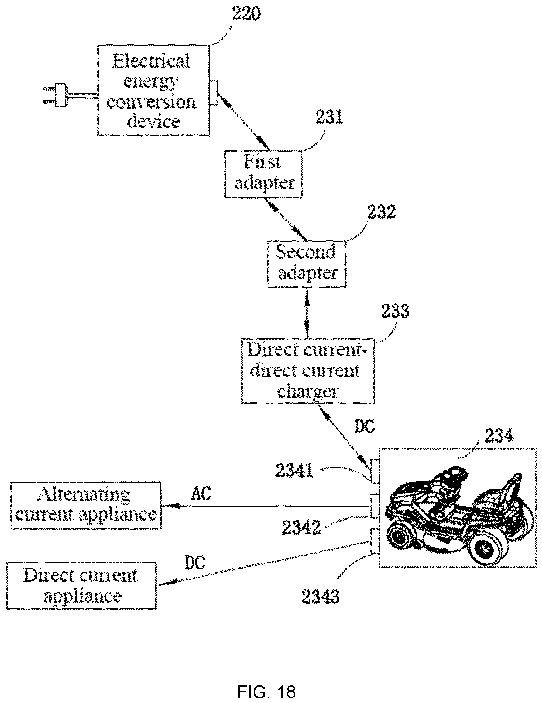

Referring to FIGS. 16 to 18, the present application further discloses a power supply system 200, specifically an alternating current and direct current bidirectional power supply system. The power supply system 200 includes a power supply 210, an electrical energy conversion device 220, and an electrical energy receiving device 230. The electrical energy conversion device 220 is configured to be electrically connected to the power supply 210 and convert the characteristic of the current drawn from the power supply 210. Multiple electrical energy receiving devices 230 are electrically connected to the electrical energy conversion device 220 to acquire electrical energy from the power supply 210.

In some examples, the output power of the electrical energy conversion device 220 is greater than or equal to 10 W and less than or equal to 10 kW. In some examples, the output power of the electrical energy conversion device 220 is greater than or equal to 10 W and less than or equal to 250 W. In some examples, the output power of the electrical energy conversion device 220 is greater than or equal to 250 W and less than or equal to 550 W. In some examples, the output power of the electrical energy conversion device 220 is greater than or equal to 500 W and less than or equal to 10 kW. In some examples, the output power of the electrical energy conversion device 220 is greater than or equal to 1000 W and less than or equal to 10 kW. In some examples, the output power of the electrical energy conversion device 220 is greater than or equal to 1 kW and less than or equal to 3 kW. In some examples, the output power of the electrical energy conversion device 220 is greater than or equal to 3 kW and less than or equal to 5 kW. In some examples, the output power of the electrical energy conversion device 220 is greater than or equal to 5 kW and less than or equal to 7 kW. In some examples, the output power of the electrical energy conversion device 220 is greater than or equal to 7 kW and less than or equal to 10 kW. In some examples, the output power of the electrical energy conversion device 220 may further include 10 W, 50 W, 100 W, 200 W, 500 W, 800 W, 1 kW, 1.5 kW, 2 kW, 2.5 kW, 3 kW, 3.5 kW, 4 kW, 4.5 kW, 5 kW, 5.5 kW, 6 kW, 6.5 kW, 7 kW, 7.5 kW, 8 kW, 8.5 kW, 9 kW, 9.5 kW, and 10 kW.

The source of the power supply 210 includes at least one of a solar panel 211, a charging pile for an electric vehicle 212, a car cigarette lighter 213, a mains socket 214, or a battery pack 215. The output power of the solar panel 211 is greater than or equal to 100 W. Of course, the solar panel 211 may have a high power output capability and the output power of the solar panel 211 is greater than or equal to 1000 W. The output of the charging pile for an electric vehicle 212 supplies power to the electrical energy receiving device 230 in the power supply system 200 through the electrical energy conversion device 220. In some examples, the output power of the charging pile for an electric vehicle 212 is greater than or equal to 1000 W. The output power of the car cigarette lighter 213 is greater than or equal to 100 W. Of course, the car cigarette lighter 213 may also have a high power output capability and the output power of the car cigarette lighter 213 is greater than or equal to 1000 W. In some examples, the car cigarette lighter 213 may be connected to the direct current-direct current charger, so as to output electrical energy in an in-vehicle power supply to supply power to the battery pack or the direct current appliance electrically connected to the direct current-direct current charger. The battery pack 215 may be an external battery pack and, of course, the battery pack 215 may also be a built-in battery pack of the riding vehicle. Types of the battery pack include, but are not limited to, LFP, Na-ion, solid/semi-solid, the 21700 battery, the 40135 battery, the 4680 battery, the 46950 battery, the 46120 battery, and 35184.

The electrical energy conversion device 220 includes at least one of the alternating current-direct current charger, the bidirectional power supply, the direct current-direct current charger, and the riding vehicle. Specifically, the alternating current-direct current charger is at least used for converting the alternating current connected to the mains socket into the direct current for the electrical energy receiving device 230 to use. In some examples, the output power of the alternating current-direct current charger is greater than or equal to 100 W. In some examples, the output power of the alternating current-direct current charger is greater than or equal to 210 W. In some examples, the alternating current-direct current charger also has a relatively high power output capability, and the output power of the alternating current-direct current charger is greater than or equal to 1000 W. The direct current-direct current charger is at least used for converting the direct current from the solar panel, the electric vehicle, the car cigarette lighter, or the battery pack into the direct current adapted to the electrical energy receiving device. When the riding vehicle is used as the electrical energy conversion device 220, the built-in battery pack may be used as the power supply to convert the direct current in the energy storage device into the alternating current for output.

The electrical energy receiving device 230 includes at least one of a device equipped with a battery pack and an alternating current appliance 235. The alternating current appliance may be a household appliance such as a television or a grill, and the power supply 210 outputs the alternating current through the electrical energy conversion device 220 to supply electrical energy to the television or the grill. In some examples, the device equipped with the battery pack includes, but is not limited to, at least one of the direct current-direct current charger, the power adapter, the riding vehicle, or an outdoor traveling device. The direct current-direct current charger is connected to the riding vehicle. In some examples, the electrical energy receiving device 230 may include multiple devices equipped with battery packs, where the devices are connected in series. Multiple energy storage devices are detachably mounted on the electrical energy receiving device. The multiple energy storage devices include at least the first energy storage device and the second energy storage device. When the power supply is powered on, the power supply charges the first energy storage device and the second energy storage device; and when the power supply is cut off, the first energy storage device charges the second energy storage device.

In some examples, the device equipped with the battery pack includes a first power adapter 231, a second power adapter 232, a direct current-direct current charger 233, and a riding vehicle 234 connected in sequence. Of course, it is also feasible that the first power adapter 231, the direct current-direct current charger 233, the second power adapter 232, and the riding vehicle 234 are connected in sequence. The electrical energy conversion device 220 exchanges control information and other information with the first power adapter 231, the second power adapter 232, and the direct current-direct current charger 233 through power carrier communication or wireless communication.

In some examples, the battery pack includes at least a cell unit, and at least one electrical energy receiving device 230 is capable of achieving the charging rate of the cell unit greater than or equal to 8 C. In some examples, the at least one electrical energy receiving device 230 is capable of achieving the charging rate of the cell unit greater than or equal to 9 C. In some examples, the at least one electrical energy receiving device 230 is capable of achieving the charging rate of the cell unit greater than or equal to 10 C.

Specifically, the first power adapter 231 is used for mounting a first battery pack 231a. The second power adapter 232 is used for mounting a second battery pack 232a. One or more first battery packs 231a or second battery packs 232a are provided. Multiple first battery packs 231a or second battery packs 232a may have the same or different types, chemical parameters, or characteristic parameters. One or more direct current-direct current chargers 233 may be provided. The direct current-direct current charger 233 is used for mounting a first energy storage device 233a or a second energy storage device 233b. When the direct current-direct current charger 233 is electrically connected to the power supply system 200, the electrical energy outputted by the electrical energy conversion device 220 can be received so as to charge the first energy storage device 233a or the second energy storage device 233b connected on the direct current-direct current charger 233. When the direct current-direct current charger 233 cannot acquire electrical energy from the power supply system 200, the first energy storage device 233a may charge the second energy storage device 233b. In some examples, the first energy storage device 233a can simultaneously charge multiple second energy storage devices 233b mounted on the direct current-direct current charger 233. In some examples, the first energy storage device is mounted to a first direct current-direct current charger, and the second energy storage device is mounted to a second direct current-direct current charger. The first energy storage device can charge the second energy storage device. In some examples, the first energy storage device is mounted to the riding vehicle, and the second energy storage device is mounted to the direct current-direct current charger. The first energy storage device charges the second energy storage device.

A bidirectional charging system further includes a wireless communication module communicatively connected to the remote device. The wireless communication module is configured to receive a signal outputted by the remote device to control the first energy storage device to charge the second energy storage device. In some examples, the wireless communication module is configured to receive the signal outputted by the remote device to control the first energy storage device on the direct current-direct current charger or the first energy storage device on the riding vehicle to charge the second energy storage device. In some examples, the remote device is configured to acquire a signal outputted by the wireless communication module to display remaining charge time or charging failure information.

In some examples, the riding vehicle or the outdoor traveling device can receive the direct current outputted by the electrical energy conversion device 220 to charge the battery pack built in the riding vehicle or the outdoor traveling device. In some examples, the riding vehicle can also output the direct current to supply power to other electrical energy receiving devices 230 connected to the electrical energy conversion device 220. The riding vehicle includes a first interface, where the first interface is configured to be electrically connected to the electrical energy output port of the first adapter or the electrical energy output port of the second adapter. The connection manner between the riding vehicle and the electrical energy output port includes, but is not limited to, a wired connection, a wireless connection, and a hard connection.

In some examples, when the electrical energy conversion device 220 in the power supply system is configured to be the riding vehicle, the power supply 210 is the battery pack disposed on the riding vehicle. In this example, the electrical energy conversion device 220 includes a bidirectional inverter module. Through the bidirectional inverter module, the electrical energy in the battery pack may output the alternating current for the television and a barbecue grill to use and output the direct current for the battery packs mounted on the first adapter or the second adapter and the direct current-direct current charger to use. The riding vehicle can also output the alternating current to directly supply power to the household appliance such as the television or the grill. In some examples, the riding vehicle can also output the direct current adapted to the mobile phone or a 4G gateway to charge the mobile phone or the 4G gateway.

Specifically, the riding vehicle or the outdoor traveling device includes a body; a traveling wheel set including traveling wheels supporting the body; a drive assembly mounted to the body and including an electric motor driving the traveling wheels to rotate; and an energy storage device detachably mounted to the body and configured to supply power to at least the electric motor. The outdoor traveling device further includes a bidirectional inverter module, where the bidirectional inverter module is configured to be capable of being electrically connected to the energy storage device and outputting the electrical energy of the energy storage device in the form of the alternating current. The energy storage device in the riding vehicle or outdoor traveling device may be detachably installed on the body, or may be fixedly installed on the body.

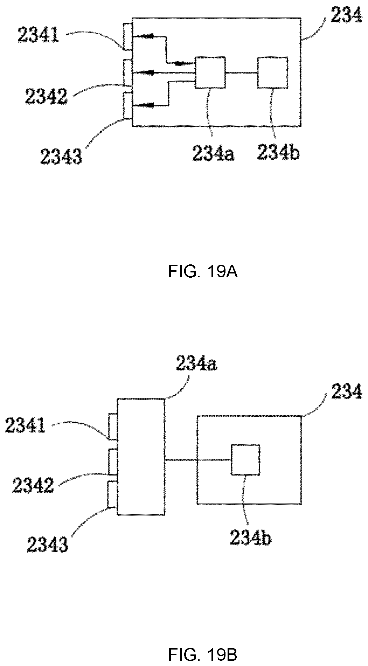

Referring to FIGS. 19A and 19B, the riding vehicle 234 is connected to a bidirectional inverter module 234a for converting the electrical energy or has a built-in bidirectional inverter module 234a for converting the electrical energy. The bidirectional inverter module is disposed in the body, or the bidirectional inverter module is independent of the body and detachably connected to an energy storage device 234b. The riding vehicle 234 includes a first interface 2341, a second interface 2342, and a third interface 2343 electrically connected to the bidirectional inverter module. The first interface 2341 is used for receiving the electrical energy from the power supply system or outputting the electrical energy to the power supply system. Specifically, the first interface 2341 is used for receiving the direct current outputted by the electrical energy conversion device 220, so as to charge the energy storage device. Of course, the first interface 2341 can also output the direct current to supply electrical energy to other electrical energy receiving devices 230 in the power supply system 200. The second interface 2342 is used for outputting the electrical energy in the energy storage device in the form of the alternating current, so as to supply power to the household appliance such as the television or the barbecue grill. The third interface 2343 is used for outputting the direct current so as to charge the mobile phone or the 4G gateway. The third interface may be a Universal Serial Bus (USB) interface, specifically Type-A or Type-C. The energy storage device in the riding vehicle may include multiple battery packs of the same type or may include battery packs of different types. For example, the energy storage device includes a battery pack with a lithium iron phosphate cell and a battery pack with a ternary lithium cell.

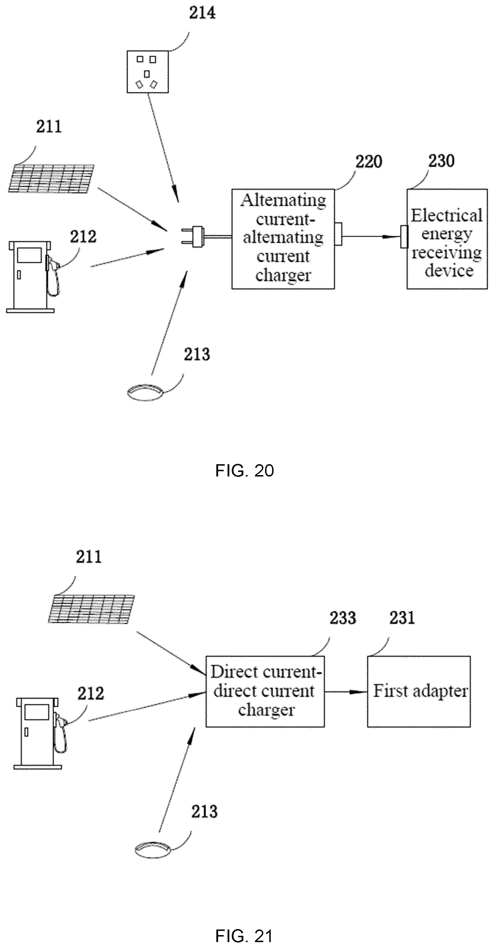

In some examples, as shown in FIG. 20, when the electrical energy conversion device 220 in the power supply system is configured to be the alternating current-direct current charger, the electrical energy in the power supply 210 can be transmitted to the first power adapter 231, the second power adapter 232, the direct current-direct current charger 233, and the riding vehicle 234. Of course, the electrical energy in the power supply 210 can also be transmitted to the household appliance such as the television or the barbecue grill. The power supply 210 may be the solar panel 211, the charging pile for an electric vehicle 212, the car cigarette lighter 213, or the mains socket 214. It is to be noted that the alternating current-direct current charger also has a direct current input port for receiving the direct current, performing voltage conversion, and outputting the direct current adapted to the electrical energy receiving device. Of course, the alternating current-direct current charger may not have the direct current input port, and the power supply that can be connected is the mains socket 214.

In some examples, as shown in FIG. 21, when the electrical energy conversion device 220 in the power supply system is configured to be the direct current-direct current charger, the electrical energy in the power supply 210 can be transmitted to the first energy storage device and the second energy storage device electrically connected to the direct current-direct current charger and the riding vehicle 234. The power supply 210 may be the solar panel 211, the charging pile for an electric vehicle 212, or the car cigarette lighter 213. It is to be noted that the power supply 210 may also specifically be the battery pack. The battery pack may be the first energy storage device, the second energy storage device, or the battery pack on the riding vehicle.

In some examples, when the electrical energy conversion device 220 in the power supply system is configured to be the bidirectional power supply, the electrical energy in the power supply 210 can be transmitted to the first power adapter 231, the second power adapter 232, the direct current-direct current charger 233, and the riding vehicle 234. The power supply 210 may be the solar panel 211, the charging pile for an electric vehicle 212, the car cigarette lighter 213, or the mains socket 214. It is to be noted that the battery pack may also be used as the power supply, and the electrical energy of the battery pack passes through the bidirectional power supply and is converted into the alternating current for the alternating current appliance to use. The battery pack may be mounted on the first adapter, the second adapter, the direct current-direct current charger, or the riding vehicle.

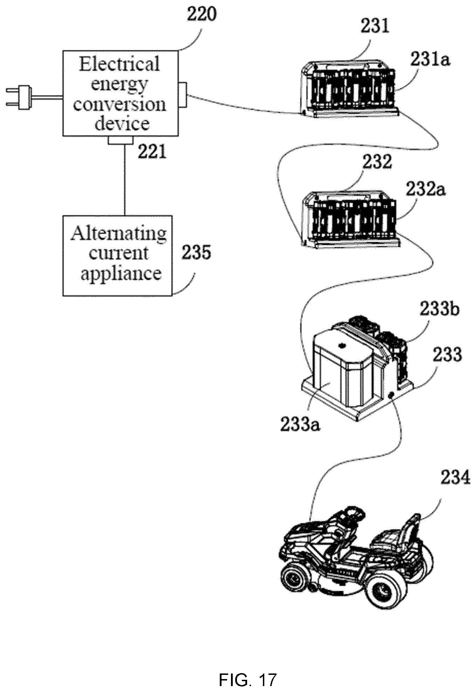

As shown in FIG. 17, in some examples, the electrical energy conversion device 220 further includes an alternating current output port 221. When the power supply is connected, the electrical energy can supply power to the alternating current appliance 235 connected to the alternating current output port 221 through the alternating current output port 221. When the power supply is cut off, the electrical energy of the multiple energy storage devices mounted on the electrical energy receiving device is outputted in the form of the alternating current through the alternating current output port 221. The alternating current output port 221 includes at least one of a mains 2 pin socket and a mains 3 pin socket.

In some examples, the power supply system supplies electrical energy to the alternating current appliance to ensure the normal operation of the alternating current appliance. When the mains interface cannot be connected to the mains power, the battery pack in the charging system is discharged to ensure the normal use of the alternating current appliance. The battery pack includes the battery pack mounted on the first adapter, the second adapter, the direct current-direct current charger, or the riding vehicle. Specifically, the bidirectional power supply converts the direct current outputted by the battery pack into the alternating current adapted to the alternating current appliance. Of course, the discharge power of the power supply system depends on the types and number of battery packs. Through the remote device, the user may set the discharge sequence of multiple battery packs in the charging system and provide a reminder of the discharge countdown, that is, the remaining battery life. When the mains interface can be connected to the mains power, the charging system performs discharging on the alternating current appliance through the bidirectional power supply and the charging pile for an electric vehicle to ensure the normal use of the alternating current appliance. In some examples, when more alternating current appliances exist and the required power is relatively large, the battery pack in the electrical energy receiving device may supply power to the alternating current appliances through the bidirectional power supply.

The charging system in the present application also has the function of discharging while charging. For example, the electrical energy conversion device receives the mains power connected to the mains interface and transmits the received electrical energy to the adapter, the direct current-direct current charger, and the riding vehicle, so as to charge the battery packs on the adapter, the direct current-direct current charger, and the riding vehicle. At the same time, the electrical energy conversion device also outputs the received mains power for the alternating current appliance to use. For example, the electrical energy conversion device receives the electrical energy outputted by the solar panel or the charging pile for an electric vehicle and transmits the received electrical energy to the adapter, the direct current-direct current charger, and the riding vehicle, so as to charge the battery packs on the adapter, the direct current-direct current charger, and the riding vehicle. At the same time, the battery packs are discharged to the peripheral device. For example, the electrical energy conversion device receives the electrical energy outputted by the charging pile for an electric vehicle and transmits the electrical energy to the battery packs mounted on the adapter, the direct current-direct current charger, and the riding vehicle, so as to charge the battery packs. At the same time, the battery packs are discharged to the peripheral device. For example, the solar panel outputs the electrical energy to the adapter or the direct current-direct current charger to charge multiple battery packs electrically connected to the adapter or the direct current-direct current charger. At the same time, the first energy storage device electrically connected to the direct current-direct current charger can charge the second energy storage device.

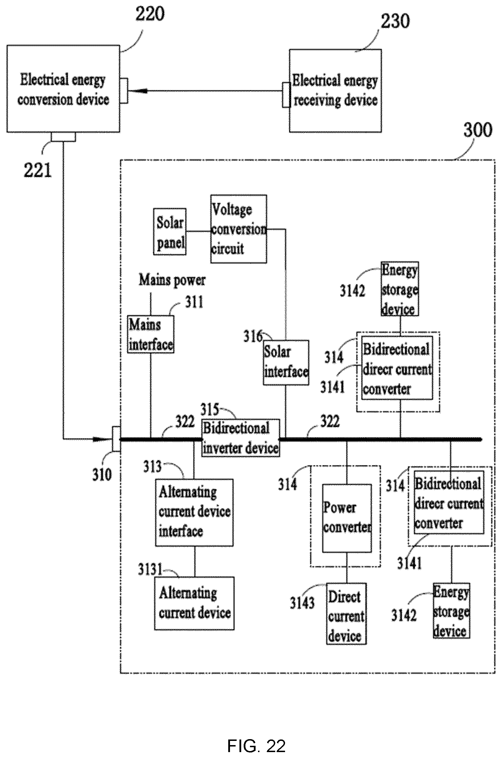

As shown in FIG. 22, the alternating current output port 221 can be connected to a home grid 300 to supply power to the home grid 300. The home grid 300 has an alternating current input interface 310 for connecting the alternating current output port 221, a 56V power bus 322, an alternating current device interface 313 for connecting an alternating current device 3131, and a direct current device interface 314 for connecting a direct current device 3143 or an energy storage device 3142. The direct current device interface 314 includes a power converter or a bidirectional direct current converter 3141. The home grid 300 further includes a bidirectional inverter device 315 electrically connected to a mains interface 311 and used for processing the mains power connected to the mains interface 311. Specifically, the bidirectional inverter device 315 is a bidirectional inverter for converting the inputted alternating current into the direct current or converting the inputted direct current into the alternating current. The home grid 300 further includes a solar interface 316 electrically connected to the power bus 322.

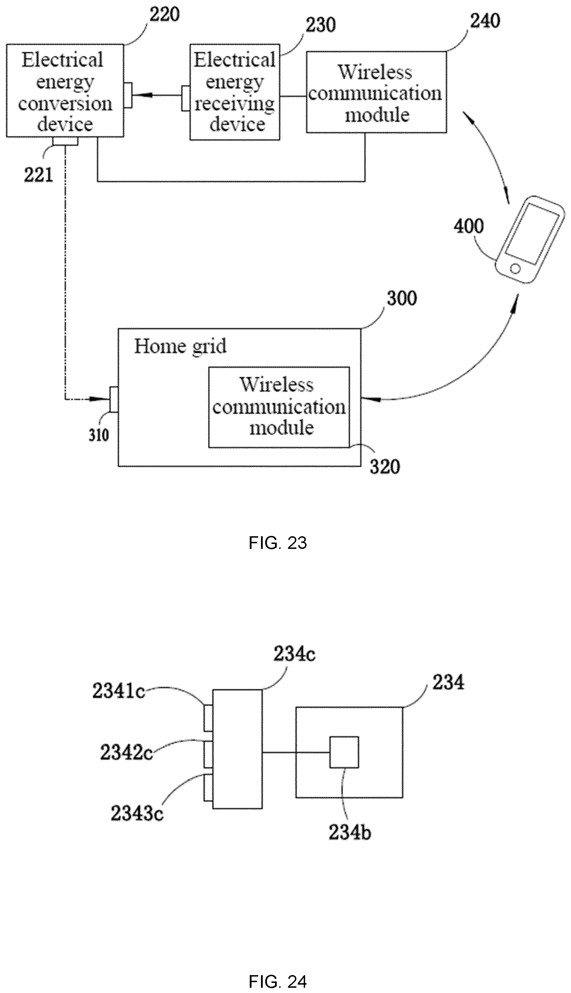

As shown in FIG. 23, the power supply system 200 further includes a wireless communication module 240 communicatively connected to a remote device 400, where the wireless communication module is configured to be communicatively connected to the home grid. The remote device is capable of recording the number of times and the duration that the home grid acquires the electrical energy through the alternating current input interface. The remote device is configured for the user to set which circuit in the home grid is prioritized for power supply. The remote device 400 may be a mobile phone, a computer, a tablet computer, or another device.

In the present application, the power supply system may also be controlled by the remote device. The user can control the operation of the power supply system through the remote device. Specifically, the power supply system further includes the wireless communication module configured to be communicatively connected to the first adapter and the second adapter, where when the wireless communication module receives a signal from the remote device, the first adapter and the second adapter charge the energy storage device mounted to the first adapter and the energy storage device mounted to the second adapter according to a sequence set by the signal.

In some examples, through the remote device, the user can control the sequence of charging and discharging of the electrical energy receiving devices in the power supply system. Specifically, the electrical energy receiving devices include multiple sequentially arranged adapters and the direct current-direct current charger. The battery packs are mounted on the adapters and the direct current-direct current charger. For example, in the charging system, three sequentially connected adapters are provided, and two direct current-direct current chargers are provided. To illustrate the charging strategy more clearly, the numbers of the adapters are set to No. 1, No. 2, and No. 3 in sequence. The numbers of the direct current-direct current chargers are No. 1 and No. 2. After the power supply 10 is connected, the user may select different charging modes on the remote device, such as a sequential charging mode and an alternate charging mode.

In the sequential charging mode, the user may choose a single sequential charging mode or a combined sequential charging mode. After the user selects the single sequential charging mode, the electrical energy provided by the power supply 10 first charges the battery pack on the No. 1 adapter, charges the battery pack on the No. 2 adapter after the battery pack on the No. 1 adapter is fully charged, charges the battery pack on the No. 3 adapter after the battery pack on the No. 2 adapter is fully charged, charges the battery pack on the No. 1 direct current-direct current charger after the battery pack on the No. 3 adapter is fully charged, and charges the battery pack on the No. 2 direct current-direct current charger after the battery pack on the No. 1 direct current-direct current charger is fully charged until the battery pack on the No. 2 direct current-direct current charger is fully charged. After the user selects the combined sequential charging mode, the electrical energy provided by the power supply 10 first simultaneously charges the battery packs on the No. 1 adapter and the No. 2 adapter, then charges the battery packs on the No. 3 adapter and the No. 1 direct current-direct current charger, and finally, charges the battery pack on the No. 2 direct current-direct current charger. Of course, the user may also set the preceding charging combination, for example, the battery packs on the No. 1 adapter, the No. 2 adapter, and the No. 3 adapter are first charged, and then the battery packs on the No. 1 direct current-direct current charger and the No. 2 direct current-direct current charger are charged.

In the alternate charging mode, the user may choose a single alternate charging mode or a combined alternate charging mode. After the user selects the single alternate charging mode, the electrical energy in the power supply 10 stops charging after charging the battery pack on the No. 1 adapter for a preset time, stops charging after charging the battery pack on the No. 2 adapter for a preset time, stops charging after charging the battery pack on No. 3 adapter for a preset time, stops charging after charging the battery pack on the No. 1 direct current-direct current charger for a preset time, stops charging after charging the battery pack on the No. 2 direct current-direct current charger for a preset time, stops charging after charging the battery pack on the No. 1 adapter for a preset time, stops charging after charging the battery pack on the No. 2 adapter for a preset time, and cycles in sequence until all the battery packs in the power supply system are fully charged. After the user selects the combined alternate charging mode, the electrical energy in the power supply 10 first stops charging after charging the battery packs on the No. 1 adapter, the No. 2 adapter, and the No. 3 adapter for a preset time, stops charging after charging the battery packs on the No. 1 direct current-direct current charger and the No. 2 direct current-direct current charger for a preset time, stops charging after charging the battery packs on the No. 1 adapter, the No. 2 adapter, and the No. 3 adapter for a preset time, and cycles in sequence until all the battery packs are fully charged. Of course, the user may also set the preceding charging combination, for example, the battery packs on the No. 1 adapter and the No. 2 adapter are first charged, and then the battery packs on the No. 3 adapter, the No. 1 direct current-direct current charger, and the No. 2 direct current-direct current charger are charged. The battery packs are charged by adopting the preceding combined alternate charging mode so that the charging efficiency of the power supply system can be improved.

In some examples, the user may set the mode of the charging power through the remote device. Specifically, a fast charging mode or a normal charging mode may be selected. Of course, the charging power may also be set according to the requirement. For example, the user may set the gear of the charging power. For example, the user may select the first gear, the second gear, the third gear, or other gears, and different gears correspond to different charging power.

In some examples, the user may also set the life mode of the battery pack through the remote device. Specifically, the user may set the life mode to 100%, 90%, or 80%. It is to be understood that when the life mode of the battery pack is set to 80%, the battery pack no longer receives the electrical energy input when the power reaches 80%. Of course, the life mode may also include other gears, such as 70% or others.

In some examples, the user may set a reminder of the charging percentage of the battery pack through the remote device. For example, the user wants to receive a reminder from the remote device when the battery pack reaches 50% charge. Of course, the preceding percentage is only set to 50% schematically, and the user may reasonably set the percentage on the remote device according to actual requirements.

In some examples, the user may also perform scheduled charging settings or charging timing settings through the remote device. For example, the user may charge the preset battery pack or the electrical energy receiving device in the power supply system after an hour reservation on the remote device. Of course, the user may also perform charging timing settings of the power supply system on the remote device so that the repeated operations of the user can be avoided and the convenience and intelligence of the entire power supply system can be improved.

In some examples, a controller and a memory are built in the remote device and used for storing and calculating the total charging power of the power supply system every day, every week, every month, or every year. The user can view the total charging power through the remote device to know the working state of the entire power supply system. In addition, the remote device can also display the proportion of the charging power outputted by the solar panel in the total charging power, so as to analyze the utilization rate of solar energy.

In some examples, the user may also select the electrical energy receiving device that is charged preferentially through the remote device. For example, through the remote device, the user may set the battery pack with the maximum power to be charged preferentially. Of course, the user may also set the battery pack that is the most accessible for the user in the power supply system to be charged preferentially.

Of course, in some examples, through the remote device, the user may customize the charging sequence of the electrical energy receiving devices or choose and charge part of the battery packs.

To improve the user experience and the intelligence of the power supply system, the power supply system also has the functions of a full charge reminder and a failure reminder. Specifically, when the electrical energy receiving device in the power supply system is fully charged, the user can receive a full charge reminder of the corresponding electrical energy receiving device through the remote device. When the power supply system fails, the remote device displays the abnormal problem on a display interface and sends a message, makes a call, or generates an alarm to remind the user.

Referring to FIG. 24, an adapter 234c is detachably mounted to an electric driving device 234 on which the energy storage device 234b is disposed. Specifically, the adapter 234c includes an alternating current input interface 2341c, an alternating current output interface 2342c, an energy storage device interface 2343c, and the bidirectional inverter module. The alternating current input interface 2341c is configured to input the alternating current. The alternating current output interface 2342c is configured to output the alternating current. The energy storage device interface 2343c is configured to be electrically connected to the energy storage device 234b. The bidirectional inverter module is electrically connected to the alternating current input interface 2341c, the alternating current output interface 2342c, and the energy storage device interface 2343c. The bidirectional inverter module 234a is configured to charge the energy storage device 234b using the alternating current inputted from the alternating current input interface 2341c and output the electrical energy of the energy storage device 234b using the alternating current output interface 2342c. In some examples, the alternating current input interface 2341c is 3 prong outlet. In some examples, the alternating current output interface 2342c is a 3 pin socket or a 2 pin socket. In some examples, the adapter 234c further includes a USB interface for supplying power to the mobile phone or the 4G gateway. In some examples, the energy storage device 234b includes at least one battery pack detachably connected to the electric driving device. In this example, the output power of the adapter 234c is greater than or equal to 500 W and less than or equal to 2000 W. The total energy of the energy storage device is greater than or equal to 0.5 kW·h and less than or equal to 6 kW·h.

The electric driving device may be the riding vehicle, such as the riding mower or the all-terrain vehicle. Of course, the electric driving device may also be a push snow thrower or a push mower. In some examples, the electric driving device may also be an electric motorcycle, a utility task vehicle (UTV), a motorboat, a drone, or the like.

In some examples, two electric driving devices can charge each other. The electric driving device includes a body; a traveling wheel set including traveling wheels supporting the body; a drive assembly mounted to the body and including an electric motor for driving the traveling wheels to rotate; an energy storage device detachably mounted to the body and configured to supply power to at least the electric motor; and a direct current interface electrically connected to the energy storage device and configured to charge the energy storage device when the direct current interface is connected to an external power supply. The direct current interface is further configured to output the direct current and charge another electric driving device using the electrical energy of the energy storage device. In some examples, the external power supply is another electric driving device. In some examples, the external power supply is the charger. In some examples, the direct current interface can also charge other devices. Other devices are the mobile phone, a lighting device, a fan, and the like.

The charging device in the present application has a relatively strong loading capacity, and at the same time, anti-theft design and monitoring are performed on the battery pack mounted on the charging device.

In some examples, a charging device includes a housing; and a battery pack interface disposed on the housing and configured to be capable of being coupled with a battery pack. The charging device further includes an anti-theft device, where the anti-theft device includes a locked state and an unlocked state. When the anti-theft device is in the locked state, the battery pack is constrained within a first distance from the charging device; and when the anti-theft device is in the unlocked state, the battery pack is removable from the charging device. In some examples, the anti-theft device is a chain. An end of the anti-theft device is connected to the battery pack, and the other end of the anti-theft device is connected to the charging device. The first distance is less than or equal to 1 meter. In some examples, the first distance is less than or equal to 0.5 meters. An unlocking manner of the anti-theft device may be at least one of fingerprint recognition, a mechanical lock, voice control, face recognition, and remote unlocking. The anti-theft device is configured to unlock or lock multiple battery packs mounted to the battery pack interface one by one. The anti-theft device is configured to simultaneously unlock or lock multiple battery packs mounted to the battery pack interface.

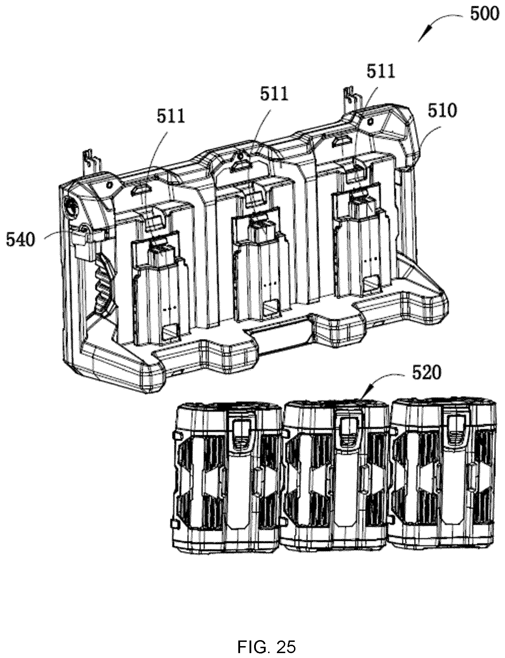

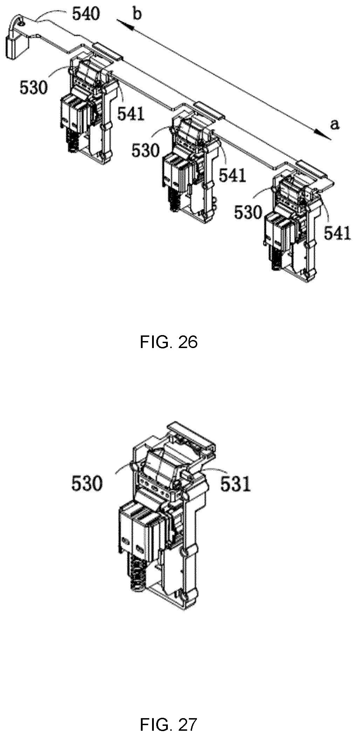

In some examples, as shown in FIGS. 25 to 27, a charging device 500 includes a housing 510 and battery pack interfaces 511 disposed on the housing 510 and configured to be capable of being coupled with battery packs 520. Fixing devices 530 are configured to be operated by the user to switch between a first state and a second state. When the fixing devices 530 are in the first state, the battery packs 520 are fixed on the charging device 500; and when the fixing devices 530 are in the second state, the battery packs 520 are movable freely relative to the charging device 500. The charging device 500 further includes a locking device 540, where the locking device 540 includes a locked state and an unlocked state. When the locking device 540 is in the locked state, the fixing device 530 is constrained in the first state; and when the locking device 540 is in the unlocked state, the fixing device 530 is capable of being operated by the user to switch to the second state.

Specifically, a limiting portion 531 is formed on the fixing device 530, and ratchets 541 are disposed on the locking device 540. When the locking device 540 is in the locked state, the limiting portion 531 abuts against the ratchet 541, and the fixing device 530 cannot switch from the first state to the second state. When the user operates the locking device 540 to move along the direction indicated by arrow a, the limiting portion 531 is not in contact with the ratchet 541, and the fixing device 530 can switch from the first state to the second state. When the locking device 540 is in the unlocked state and the user operates the locking device 540 to move along the direction indicated by arrow b, the limiting portion 531 abuts against the ratchet 541, and the fixing device 530 cannot switch from the first state to the second state.

In some examples, the locking device 540 is a latch. In some examples, the fixing device 530 is a snap. In some examples, an unlocking manner of the locking device may be at least one of fingerprint recognition, a mechanical lock, voice control, face recognition, and remote unlocking.

In some examples, the locking device or the fixing device is configured to unlock or lock multiple battery packs mounted to the battery pack interface one by one. In some examples, the locking device or the fixing device is configured to simultaneously unlock or lock multiple battery packs mounted to the battery pack interface.

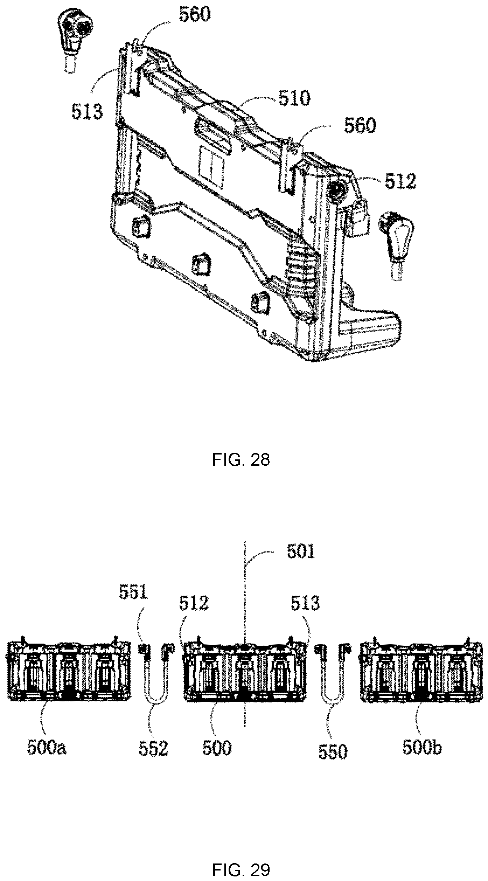

In some examples, as shown in FIGS. 28 and 29, the charging device 500 includes a first port 512 disposed on the housing 510 and used for inputting the current or outputting the current; and a second port 513 disposed on the housing 510 and used for outputting the current or inputting the current. The first port 512 and the second port 513 are capable of being used interchangeably. When the first port 512 is configured to input the current, the second port 513 is configured to output the current; and when the second port 513 is configured to input the current, the first port 512 is configured to output the current. Specifically, the first port 512 and the second port 513 have the same shape. In some examples, the first port 512 and the second port 513 are symmetrically disposed on two sides of the charging device. In some examples, the first port 512 and the second port 513 are disposed on the upper portion of the housing 510. In some examples, the first port is disposed on the upper portion of the housing, and the second port is disposed on the lower portion of the housing. In some examples, the first port and the second port are disposed on the lower portion of the housing. In some embodiments, the first port 512 and the second port 513 have basically the same voltage. In some examples, the first port 512 is used for connecting a first charging device 500a. The second port 513 is used for connecting a second charging device 500b. The first port 512 and the second port 513 have the same structure and are capable of separately receiving a current input at different times. The first port 512 and the second port 513 are symmetrical about a middle plane 501 of the charging device 500. The first port 512 and the second port 513 are located on the upper portion of the charging device 500. The first port 512 and the second port 513 are connected to other devices through cables. Specifically, a cable 550 includes quarter-turn connectors 551 and a wire 552. Specifically, the cable 550 includes two quarter-turn connectors connected at two ends of the wire. The cables 550 are adopted so that the installation space when two charging devices are connected can be saved. In some examples, the charging device 500 further includes fixing assemblies 560 for fixing the charging device 500 to another object. In some examples, the fixing assemblies 560 are detachably mounted to the housing 510. In some examples, the fixing assemblies 560 are snap clips.

In some examples, a charging device includes a first adapter and a second adapter.

The first adapter includes a housing; at least one accommodation portion for mounting an energy storage device, where the first adapter is capable of charging the energy storage device mounted to one of the at least one accommodation portion; and a first port disposed on the housing and used for connecting the second adapter. The second adapter includes a housing; at least one accommodation portion for mounting an energy storage device, where the second adapter is capable of charging the energy storage device mounted to one of the at least one accommodation portion; and a second port disposed on the housing and used for connecting the first adapter. The first port and the second port have the same structure and are connected through a cable. The cable is configurable in different lengths. At least one end of the cable is configured to be the quarter-turn connector. An end of the cable is detachable from the first port. An end of the cable is detachable from the second port. In some examples, the first adapter and the second adapter are the same. In some examples, the first adapter and the second adapter are different. The first adapter further includes the support assembly capable of supporting the second adapter. The first adapter further includes the fixing assembly for fixing the first adapter to another object. The first port is disposed on the upper portion of the housing of the first adapter.

In this manner, the first port and the second port of the charging device have the same appearance and can be used interchangeably so that the user experience can be improved, the charging device can be adapted to more space application scenarios, and it is convenient for the user to perform installation and wiring.

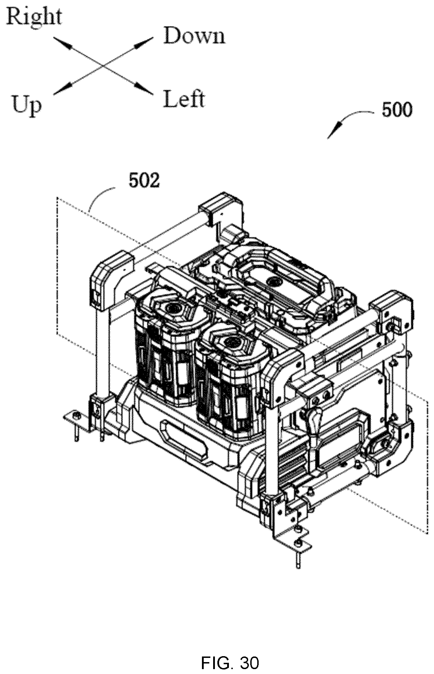

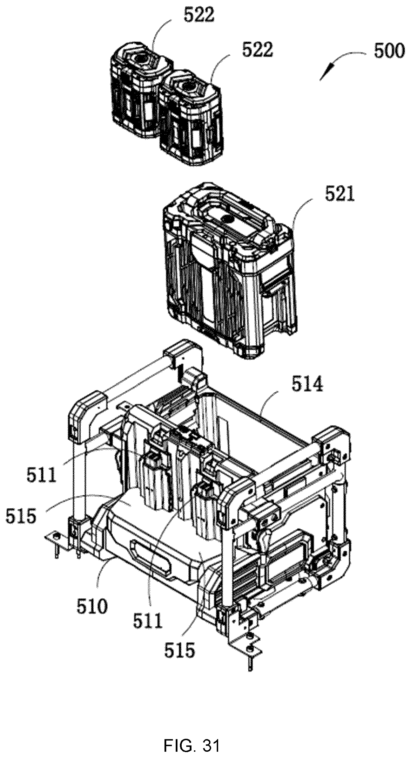

In some examples, as shown in FIGS. 30 and 31, the charging device 500 includes the housing 510; a first accommodation portion 514 disposed at the housing 510 and configured to mount a first energy storage device 521; and at least two second accommodation portions 515 disposed at the housing 510 and configured to mount second energy storage devices 522. The volume of the first energy storage device 521 is greater than the volume of the second energy storage device 522. The first accommodation portion 514 and the at least two second accommodation portions 515 are separately disposed on two sides of a partition surface 502. When the second energy storage devices are mounted to the second mounting portions and the first energy storage device is mounted to the first accommodation portion, the width of the projection of the first energy storage device on the partition surface is basically equal to the width of the projection of all the second energy storage devices on the partition surface.

In some examples, the charging device 500 includes the housing 510; the first accommodation portion 514 disposed at the housing 510 and used for mounting the first energy storage device 521; and the second accommodation portions 515 disposed at the housing 510 and used for mounting the second energy storage devices 522. The weight of the first energy storage device 521 is greater than the weight of the second energy storage device 522. When the charging device 500 is placed on a plane 503, the first energy storage device 521 is inserted into the first accommodation portion 514 along the direction of a first straight line 504, and the included angle formed by the first straight line 504 and the plane 503 is greater than or equal to 0 degrees and less than or equal to 60 degrees. In some examples, the included angle formed by the first straight line 504 and the plane 503 is greater than or equal to 10 degrees and less than or equal to 45 degrees. In some examples, the included angle formed by the first straight line 504 and the plane 503 is equal to 15 degrees. When the charging device 500 is placed on the plane 503, the first energy storage device 521 is located below the second energy storage device 522 in the up and down direction.

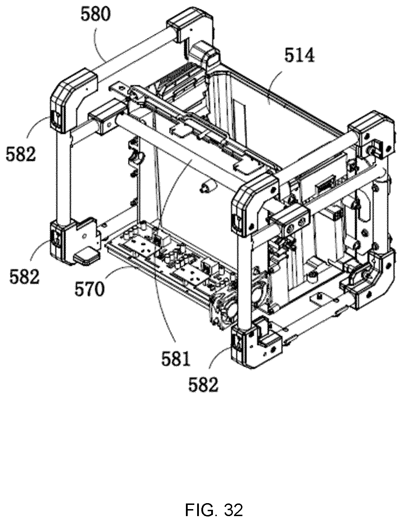

In some examples, as shown in FIG. 32, the charging device 500 further includes a circuit board 570 disposed in the housing 510, where the circuit board 570 is basically parallel to the bottom surface of the charging device 510. Specifically, the circuit board 570 is at least partially disposed below the first accommodation portion 514 and the second accommodation portions 515 in the up and down direction. A heat dissipation airflow is formed in the housing 510 and basically flows along the long end of the circuit board 570.

In some examples, the charging device 500 includes the housing 510; and at least one battery pack interface 511 disposed on the housing 510 and configured to be capable of being coupled with the battery pack. The charging device 500 further includes a frame 580, and the housing is accommodated within a cuboid defined by the frame 580. Specifically, the frame includes or is formed with a handle for the user to lift. In some examples, the frame is made of plastic. In some examples, the frame is made of metal. In some examples, the battery pack is configured to be insertable from the outside of the cuboid defined by the frame 580 into the inside of the cuboid to be coupled to the battery pack interface 511. Specifically, the frame includes a transverse bar 581 disposed near the partition surface 502. It is to be noted that the frame may be understood as a specific example of the support assembly in the present application.

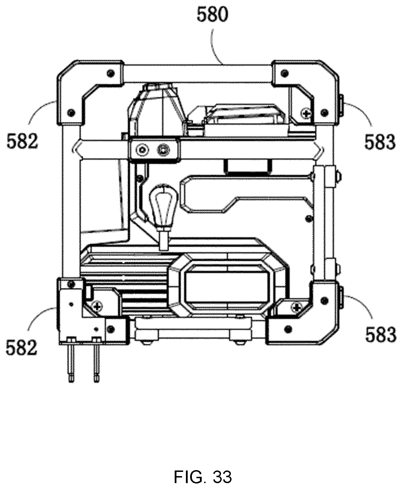

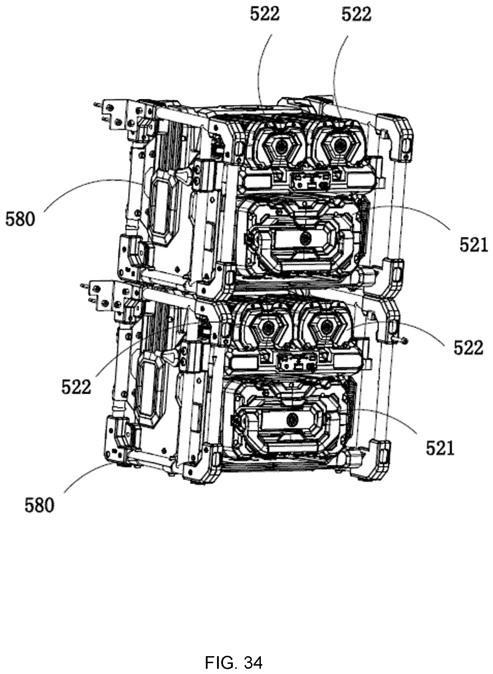

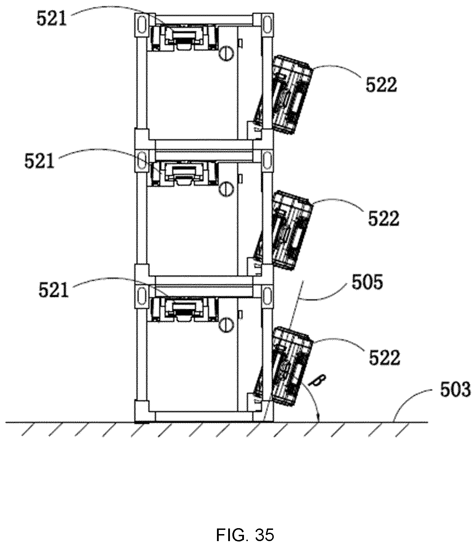

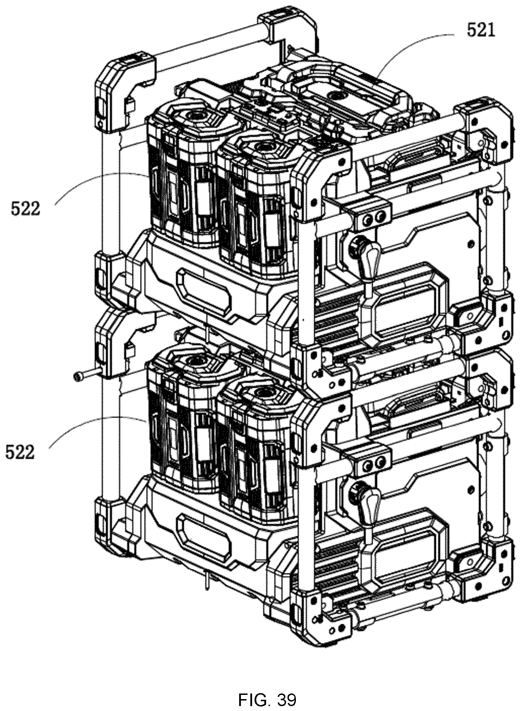

In some examples, as shown in FIGS. 32 and 33, the charging device 500 includes the housing 510; and at least one battery pack interface 511 disposed on the housing 510 and configured to be coupled with the battery pack. Multiple charging devices 500 are capable of being stacked in a first manner and a second manner, where the placement direction of the multiple charging devices in the first manner is different from the placement direction of the multiple charging devices in the second manner. The charging device further includes the frame, and the housing is accommodated within the cuboid defined by the frame 580. In some examples, the frame includes or is formed with the handle for the user to lift. In some examples, the top corners of the frame 580 form protrusions 583 or recesses 582; and when frames 580 are stacked, protrusions and recesses 582 are capable of mating with each other and being fixed. Specifically, when the charging devices are stacked in the first direction as shown in FIG. 34, all the battery packs are accessible. When the charging devices are stacked in the second direction as shown in FIG. 35, at least part of the battery packs are inaccessible. In some examples, when the charging devices are stacked in the third direction as shown in FIG. 39, only the battery packs on the uppermost charging device are accessible.

In some examples, the charging device 500 further has a power display unit for displaying a power state of the battery pack mounted on the charging device 500.

In some examples, the charging device 500 includes the housing 510; the first accommodation portion 514 disposed at the housing 510 and used for mounting the first energy storage device 521, where the first energy storage device 521 includes multiple first cells; and the second accommodation portions 515 disposed at the housing 510 and used for mounting the second energy storage devices 522, where the second energy storage device 522 includes multiple second cells. The volume of the first cell is greater than the volume of the second cell. As shown in FIG. 35, multiple charging devices are capable of being stacked, and when the multiple charging devices are stacked on the plane 503, the first cells are basically parallel to the plane 503. In some examples, the second energy storage device 522 is inserted into the second accommodation portion 515 along the extension direction of a second straight line 505, and the included angle β formed by the second straight line 505 and the plane 503 is greater than or equal to 45 degrees and less than or equal to 80 degrees. In some examples, the included angle β formed by the second straight line 505 and the plane 503 is greater than or equal to 50 degrees and less than or equal to 70 degrees. In some examples, the included angle β formed by the second straight line 505 and the plane 503 may be 45°, 50°, 55°, 60°, 65°, 70°, 75°, or 80°.

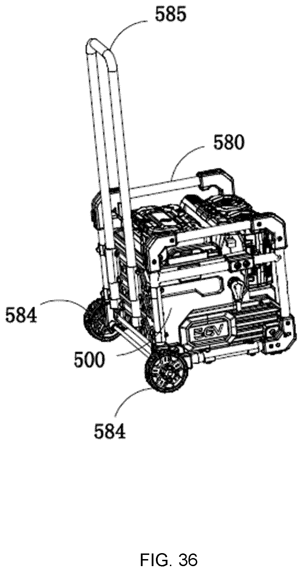

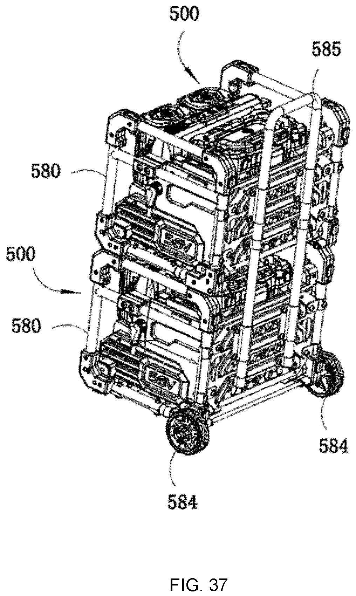

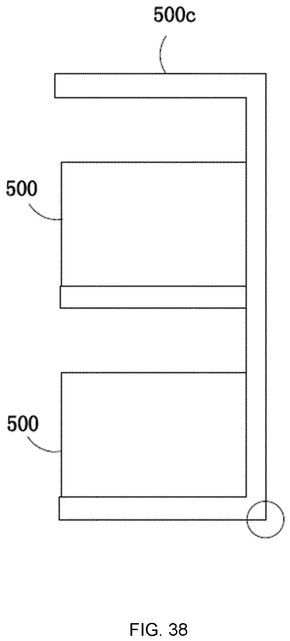

In some examples, as shown in FIGS. 36 and 37, the charging system includes multiple charging devices, where the multiple charging devices 500 can be stacked through the frames 580. Specifically, wheels 584 and a pull rod 585 are capable of being detachably mounted on the frame 580. When the multiple charging devices 500 need to be moved, the wheels and pull rods are mounted on the frame 580 of the lowest charging device so that the charging system can be easily moved. In some examples, as shown in FIG. 38, the charging system includes the multiple charging devices 500 and a cabinet 500c on which the multiple charging devices are placed, where the cabinet 500c has wheels for easy movement.

## Claims

1. A charging system (100, 200) comprising a plurality of cascaded devices, wherein the plurality of cascaded devices comprises at least one first charging device (10a, 231) and at least one second charging device (10c, 234);
wherein each of the at least one first charging device comprises:
a housing (11);
at least one first accommodation portion (12) disposed at the housing and used for mounting a first energy storage device (20), wherein the first charging device is configured for charging the first energy storage device mounted to a first accommodation portion of the at least one first accommodation portion; and
a second connecting port (112) for connecting one of the at least one second charging device or another first charging device;
wherein each of the at least one second charging device comprises:
a housing (11);
at least one second accommodation portion (12) disposed at the housing and used for mounting a second energy storage device (20), wherein the second charging device is configured for charging the second energy storage device mounted to a second accommodation portion of the at least one second accommodation portion; and
a first connecting port (111) for connecting one of the at least one first charging device or another second charging device; **characterized in that**
the first accommodation portion and the second accommodation portion have different shapes or dimensions; and
the first connecting port and the second connecting port are used for inputting a current or outputting a current, and the first connecting port and the second connecting port are configured for being used interchangeably.

2. The charging system of claim 1, wherein the first accommodation portion is configured to mount the first energy storage device, the second accommodation portion is configured to mount the second energy storage device, and a capacity of the first energy storage device is greater than a capacity of the second energy storage device.

3. The charging system of claim 2, wherein the first energy storage device comprises a plurality of first energy storage units, the second energy storage device comprises a plurality of second energy storage units, and the plurality of first energy storage units and the plurality of second energy storage units have different chemical properties.

4. The charging system of claim 3, wherein each of the plurality of first energy storage units is a lithium iron phosphate cell.

5. The charging system of claim 3, wherein each of the plurality of second energy storage units is a ternary lithium cell.

6. The charging system of claim 1, wherein the first charging device and the second charging device are the same.

7. The charging system of claim 1, wherein the first charging device and the second charging device are different.

8. The charging system of claim 1, wherein the second charging device is a riding mower (234) with a charging function.

9. The charging system of claim 1, wherein the first charging device and the second charging device are configured for being connected through a cable (550).

10. The charging system of claim 1, wherein the connecting port of the first charging device and the connecting port of the second charging device have a same shape.

11. The charging system of claim 1, wherein output power of the first charging device or the second charging device is greater than or equal to 500 W and less than or equal to 2000 W.

12. The charging system of claim 2, wherein a current in the first energy storage device is configured for flowing to the second energy storage device.

13. The charging system of claim 1, wherein a plurality of second charging devices are configured for being stacked.

14. The charging system of claim 1, wherein the second charging device has a plurality of second accommodation portions, wherein at least two of the plurality of second accommodation portions have different shapes or dimensions.

## Patentansprüche

1. Ein Ladesystem (100, 200), umfassend eine Mehrzahl von kaskadierten Vorrichtungen, wobei die Mehrzahl von kaskadierten Vorrichtungen mindestens eine erste Ladevorrichtung (10a, 231) und mindestens eine zweite Ladevorrichtung (10c, 234) umfasst;
wobei jede der mindestens einen ersten Ladevorrichtungen umfasst:
ein Gehäuse (11);
mindestens einen ersten Aufnahmeteil (12), der am Gehäuse angeordnet ist und zur Aufnahme eines ersten Energiespeichers (20) dient, wobei die erste Ladevorrichtung dazu konfiguriert ist, den in einem ersten Aufnahmeteil der mindestens einen ersten Aufnahmeteile montierten ersten Energiespeicher zu laden; und
einen zweiten Anschlussport (112) zum Anschließen einer der mindestens einen zweiten Ladevorrichtungen oder einer weiteren ersten Ladevorrichtung;
wobei jede der mindestens einen zweiten Ladevorrichtungen umfasst:
ein Gehäuse (11);
mindestens einen zweiten Aufnahmeteil (12), der am Gehäuse angeordnet ist und zur Aufnahme eines zweiten Energiespeichers (20) dient, wobei die zweite Ladevorrichtung dazu konfiguriert ist, den in einem zweiten Aufnahmeteil der mindestens einen zweiten Aufnahmeteile montierten zweiten Energiespeicher zu laden; und
einen ersten Anschlussport (111) zum Anschließen einer der mindestens einen ersten Ladevorrichtungen oder einer weiteren zweiten Ladevorrichtung;
**dadurch gekennzeichnet, dass**
der erste Aufnahmeteil und der zweite Aufnahmeteil unterschiedliche Formen oder Abmessungen aufweisen; und
der erste Anschlussport und der zweite Anschlussport zum Eingeben oder Ausgeben eines Stroms verwendet werden und der erste Anschlussport und der zweite Anschlussport austauschbar verwendbar sind.

2. Das Ladesystem nach Anspruch 1, wobei der erste Aufnahmeteil zur Aufnahme des ersten Energiespeichers konfiguriert ist, der zweite Aufnahmeteil zur Aufnahme des zweiten Energiespeichers konfiguriert ist und eine Kapazität des ersten Energiespeichers größer ist als eine Kapazität des zweiten Energiespeichers.

3. Das Ladesystem nach Anspruch 2, wobei der erste Energiespeicher eine Mehrzahl von ersten Energiespeichereinheiten umfasst, der zweite Energiespeicher eine Mehrzahl von zweiten Energiespeichereinheiten umfasst, und die Mehrzahl von ersten Energiespeichereinheiten und die Mehrzahl von zweiten Energiespeichereinheiten unterschiedliche chemische Eigenschaften aufweisen.

4. Das Ladesystem nach Anspruch 3, wobei jede der Mehrzahl von ersten Energiespeichereinheiten eine Lithium-Eisenphosphat-Zelle ist.

5. Das Ladesystem nach Anspruch 3, wobei jede der Mehrzahl von zweiten Energiespeichereinheiten eine ternäre Lithium-Zelle ist.

6. Das Ladesystem nach Anspruch 1, wobei die erste Ladevorrichtung und die zweite Ladevorrichtung identisch sind.

7. Das Ladesystem nach Anspruch 1, wobei die erste Ladevorrichtung und die zweite Ladevorrichtung unterschiedlich sind.

8. Das Ladesystem nach Anspruch 1, wobei die zweite Ladevorrichtung ein Aufsitzmäher (234) mit Ladefunktion ist.

9. Das Ladesystem nach Anspruch 1, wobei die erste Ladevorrichtung und die zweite Ladevorrichtung über ein Kabel (550) verbunden sind.

10. Das Ladesystem nach Anspruch 1, wobei der Anschlussport der ersten Ladevorrichtung und der Anschlussport der zweiten Ladevorrichtung die gleiche Form haben.

11. Das Ladesystem nach Anspruch 1, wobei die Ausgangsleistung der ersten Ladevorrichtung oder der zweiten Ladevorrichtung größer oder gleich 500 W und kleiner oder gleich 2000 W ist.

12. Das Ladesystem nach Anspruch 2, wobei ein Strom im ersten Energiespeicher dazu konfiguriert ist, zum zweiten Energiespeicher zu fließen.

13. Das Ladesystem nach Anspruch 1, wobei eine Mehrzahl von zweiten Ladevorrichtungen stapelbar ist.

14. Das Ladesystem nach Anspruch 1, wobei die zweite Ladevorrichtung eine Mehrzahl von zweiten Aufnahmeteilen aufweist, wobei mindestens zwei der Mehrzahl von zweiten Aufnahmeteilen unterschiedliche Formen oder Abmessungen haben.

## Revendications

1. Un système de charge (100, 200) comprenant une pluralité de dispositifs en cascade, la pluralité de dispositifs en cascade comprenant au moins un premier dispositif de charge (10a, 231) et au moins un second dispositif de charge (10c, 234) ;
chaque premier dispositif de charge comprenant :
un boîtier (11) ;
au moins une première partie de logement (12) disposée sur le boîtier et destinée à recevoir un premier dispositif de stockage d'énergie (20), le premier dispositif de charge étant configuré pour charger le premier dispositif de stockage d'énergie monté dans une première partie de logement parmi les au moins une première partie de logement ; et
un second port de connexion (112) permettant de connecter l'un des au moins un second dispositif de charge ou un autre premier dispositif de charge ;
chaque second dispositif de charge comprenant :
un boîtier (11) ;
au moins une seconde partie de logement (12) disposée sur le boîtier et destinée à recevoir un second dispositif de stockage d'énergie (20), le second dispositif de charge étant configuré pour charger le second dispositif de stockage d'énergie monté dans une seconde partie de logement parmi les au moins une seconde partie de logement ; et
un premier port de connexion (111) permettant de connecter l'un des au moins un premier dispositif de charge ou un autre second dispositif de charge ;
**caractérisé en ce que**
la première partie de logement et la seconde partie de logement ont des formes ou des dimensions différentes ; et
le premier port de connexion et le second port de connexion sont utilisés pour l'entrée ou la sortie d'un courant, et le premier port de connexion et le second port de connexion sont configurés pour être utilisés de manière interchangeable.

2. Le système de charge selon la revendication 1, dans lequel la première partie de logement est configurée pour recevoir le premier dispositif de stockage d'énergie, la seconde partie de logement est configurée pour recevoir le second dispositif de stockage d'énergie, et la capacité du premier dispositif de stockage d'énergie est supérieure à la capacité du second dispositif de stockage d'énergie.

3. Le système de charge selon la revendication 2, dans lequel le premier dispositif de stockage d'énergie comprend une pluralité de premières unités de stockage d'énergie, le second dispositif de stockage d'énergie comprend une pluralité de secondes unités de stockage d'énergie, et la pluralité de premières unités de stockage d'énergie et la pluralité de secondes unités de stockage d'énergie ont des propriétés chimiques différentes.

4. Le système de charge selon la revendication 3, dans lequel chacune des premières unités de stockage d'énergie est une cellule au phosphate de fer lithium.

5. Le système de charge selon la revendication 3, dans lequel chacune des secondes unités de stockage d'énergie est une cellule lithium-ion ternaire.

6. Le système de charge selon la revendication 1, dans lequel le premier dispositif de charge et le second dispositif de charge sont identiques.

7. Le système de charge selon la revendication 1, dans lequel le premier dispositif de charge et le second dispositif de charge sont différents.

8. Le système de charge selon la revendication 1, dans lequel le second dispositif de charge est une tondeuse autoportée (234) avec une fonction de charge.

9. Le système de charge selon la revendication 1, dans lequel le premier dispositif de charge et le second dispositif de charge sont configurés pour être connectés via un câble (550).

10. Le système de charge selon la revendication 1, dans lequel le port de connexion du premier dispositif de charge et le port de connexion du second dispositif de charge ont la même forme.

11. Le système de charge selon la revendication 1, dans lequel la puissance de sortie du premier dispositif de charge ou du second dispositif de charge est supérieure ou égale à 500 W et inférieure ou égale à 2000 W.

12. Le système de charge selon la revendication 2, dans lequel un courant dans le premier dispositif de stockage d'énergie est configuré pour circuler vers le second dispositif de stockage d'énergie.

13. Le système de charge selon la revendication 1, dans lequel une pluralité de seconds dispositifs de charge sont configurés pour être empilés.

14. Le système de charge selon la revendication 1, dans lequel le second dispositif de charge comprend une pluralité de secondes parties de logement, au moins deux des secondes parties de logement ayant des formes ou des dimensions différentes.
